# EUROPEAN PATENT APPLICATION

(11) **EP 4 684 953 A1**
(43) Date of publication of application: **28.01.2026**
(21) Application number: 24382807.6
(22) Date of filing: 23.07.2024
(51) Int. Cl.: B32B 1/08, B32B 7/027, B32B 27/08, B32B 27/16, B32B 27/30, B32B 27/32, B32B 27/34, A22C 5/00, A22C 13/00

(54) **RECYCLABLE POLYOLEFIN-BASED PLASTIC CASING FOR COOKED SAUSAGES**

(71) Applicant: Viscofan CZ, s.r.o., 370 01 Ceské Budejovice (CZ)
(72) Inventor: RAUE, Frank, 69469 WEINHEIM (DE); FERON, Bernhard, 69469 WEINHEIM (DE); TORRES, Agustin, 370 01 CESKÉ BUDEJOVICE (CZ); BOUMA, Marek, 370 01 CESKÉ BUDEJOVICE (CZ); PAUWELS, Arne, 69469 WEINHEIM (DE); ORTIZ, Angel, 04707-000 SAO PAULO (BR); ZANALDO, Viviane, 04707-000 SAO PAULO (BR)
(74) Representative: Herrero & Asociados, S.L.

(57) **Abstract**

The present invention provides a recyclable multi-layered coextruded bi-axially oriented thermoplastic food casing characterized by a high polyolefin content, two skin layers essentially of the same polyolefin type, a non-skin layer with a component, having a density greater than 1,00 g/cm³, an overall density of less than 1,00 g/cm³ and a ratio of stiffness in transversal direction to stiffness in machine direction of more than 1, where the high stiffness is obtained without radiation/crosslinking. The casing yields wrinkle-free sausages.

## Description

### TECHNICAL FIELD OF THE INVENTION

The present invention belongs to the field of recyclable plastic casings for foodstuff. In particular, the recyclable casing of the invention is a seamless, tubular, multilayered, coextruded, bi-axially oriented, non-crosslinked, thermoplastic food casing, which can be used as a casing for cooked sausages. The casing has a high polyolefin (PO) content and comprises two skin-layers, which are predominantly based on the same PO type, and at least one layer, which comprises at least one thermoplastic component with a density of more than 1,00 g/cm³, while the total density of the casing is below 1,00 g/cm³. Due to its particular characteristics, the casing of the present invention has the advantage of allowing to achieve wrinkle-free sausages after cooking and at the same time being highly recyclable in the recycling paths. In addition, the food casing can optionally be designed to transfer functional food additives such as flavours or colours onto the enclosed foodstuff, especially in the production of meat, cheese or fish products.

The invention further relates to a method for producing said food casing as well as to the use thereof.

### BACKGROUND ART OF THE INVENTION

Rebuilding the linear economy into a circular economy relies on establishing recycling processes for all materials and the products made thereof. The materials of the products should either be easily separable to be reused or the products should be made in such a way that their composition can be considered as a so-called "mono-material". However, the raw materials of multi-layer film structures - as e.g., of sausage casings - are often (for food safety reasons intentionally) inseparable, and the application of the films often demands the use of different materials for their material-specific properties, so that a "mono-material" can hardly fulfil the needs of the application.

### Standard plastic sausage casings

Artificial sausage casings made from different thermoplastic materials are well-known. Typically, these plastic casings are based on a predominant content of (co)polyamide (PA) because PA combines high stiffness and strength at cooking conditions with a high aroma and gas barrier. Good printability and an intrinsic meat cling, which avoids cook-out, make skin surfaces of PA preferable. As PA does not have a high water vapour barrier, multi-layer structures with at least one PO-based layer in the centre are used to increase the water vapour barrier, thus reducing weight loss during cooking and storage and increasing shelf-life. Other polymers like ethylene vinyl alcohol copolymer (EVOH) or polyvinyl alcohol (PVOH) further influence the permeability to oxygen and/or water vapour.

As an example, EP0682476 discloses a well-balanced 5-layer structure of an outside and an inside PA-layer, a core-layer based on polyethylene (PE) and two adhesivelayers between the PA-layers and the PE-layer, to make the non-polar PE and the polar PA adhere to each other.

EP1172202 discloses a multilayer casing film, comprising at least three layers including two PA layers, and an adhesive PO layer disposed between the two PA layers.

Some foodstuffs like liver paté are so sensitive to oxygen that the already good gas barrier of PA needs to be increased. Layers of EVOH can serve as an effective oxygen barrier, as described e.g., in EP0603676. This document discloses an at least 4-layered, coextruded, biaxially stretched, seamless sausage casing having one inner and one outer layer, which consist essentially of aliphatic PA, at least one core layer, which essentially consists of EVOH, and at least one further polymer layer made of PE or polypropylene (PP) and/or of ethylene- and/or propylene-based copolymers between the inner PA layer and at least one EVOH layer.

DE19529603 discloses an at least 4-layer coextruded, biaxially stretched, tubular, seamless casing for scalded and cooked sausage with a reduced tendency to tear longitudinally when the sausage product is cut. The film contains at least two outer layers predominantly made of aliphatic PA and at least two further layers, one of polyolefinic character acting as a water vapour barrier and one other based on EVOH having a high oxygen barrier effect.

WO2009015024 discloses a tubular, biaxially stretched, heat shrinkable, at least 7-layered thermoplastic food casing comprising an outer surface layer (A) comprising a PA or a PO modified with functional groups, a second layer (B) comprising a PA, first adhesive layer (C) comprising a PO modified with functional groups, a first core layer (D) comprising a (i) copolymer of ethylene and an unsaturated ester, or (ii) one or more of POs comprising a low-density polyethylene (LDPE), a high-density polyethylene (HDPE), a linear low-density polyethylene (LLDPE), and very low-density polyethylene (VLDPE), a second adhesive layer (E) of a PO modified with functional groups, a second core layer (F) comprising EVOH and an inner surface layer (G) comprising a PA.

WO9944824 discloses a heat-shrinkable multilayer film, which can be used as a tubular casing, comprising an outer seal layer comprising PO, a second layer comprising PO, polystyrene, and/or polyurethane, a third layer comprising PA and a second outer layer comprising polyester.

WO2005011978 discloses a multi-layer, bi-axially oriented, thermoplastic highmodulus film comprising a first outer layer comprising a polyester or a copolyester, a second outer layer comprising an ethylene- or propylene-homo- or -co-polymer, a core layer comprising an EVOH, and no core PA or polyester layers, having a modulus higher than 6.000 kg/cm² in at least one direction. The film is preferably oriented in a tenter frame, at an orientation ratio of higher than 2:1, preferably higher than 3:1 in both directions. Also here, the outer layers are different from each other, reducing the sortability of the film.

WO2021219683 discloses a process for producing a multilayer composite film, comprising co-extrusion of at least an outer layer (a), an intermediate, optionally multilayered layer (b) and an inner layer (c), biaxially stretching the film and relaxing the stretched film under usual conditions, wherein layer (a) comprises EVOH having a density of at least 1,12 g/cm³, layer (b) comprises a thermoplastic resin having a density of more than 1,00 g/cm³ and (c) comprises a thermoplastic resin having a density of less than 0,95 g/cm³. Consistently, the 2 outer layers are not of the same polymer type.

The problem of all the above-mentioned casings is that they have at least one non-PO outside layer, which reduces the likeliness that the casing is sorted via NIR-sensors into a PO recycling path. Structures with an outer and an inner non-PO layer have a high probability that they do not reach a recycling path for POs even if the casing is predominantly made of PO.

Also, there are described structures, which have two PO-based skin layers, which protect a PA barrier layer from humidity. In bags, the PO inner skin layer represents the so-called seal layer of the bag, which typically has a higher melting temperature than the outer skin layer and does not have to have meat adhesion. In the case of sausage casings, the inner layer may have to be modified, e.g., by composition or by surface treatment, to offer meat adhesion, thus reducing the formation of so-called purge between the emulsion and the casing. Consistently, when having the objective of offering a seal layer or special meat cling, the compositions of the two skin-layers are accepted to be different from each other.

Within this group, US5053259 discloses an oriented multilayer film comprising a first outer layer, a second outer layer, and at least one intermediate layer comprising a blend of an amorphous PA and a copolyamide having a melting point of at least 145°C. The outer layers and additional optional intermediate layers can be made of any suitable resins or resin blends, including the preferred components LLDPE, VLDPE, ethylene vinyl acetate (EVA) and blends thereof. The examples of the invention only show EVA and VLDPE as outer layers.

WO9749293 discloses a packaged cooked meat product comprising an adhering film, whose meat-contact surface comprises an olefin/acrylic acid copolymer to reduce the formation of purge between foodstuff and film. The outside layer and also further layers of the film can comprise PA, but in the examples LLDPE was used in the outside layers, making inside and outside layer comprise different polymer types.

US6406763 discloses a multilayer heat-shrinkable film for post-pasteurization comprising a first outer seal layer formed from a resin composition having a Vicat softening point of at least 100°C, a second outer layer including one or more thermoplastic gloss materials selected from the group consisting of polyester, ethylene/alpha-olefin copolymer, styrene/butadiene block copolymer, and ethylene/styrene random copolymer, and one or more inner layers between the first and second outer layers, at least one of the inner layers including an ethylene/[alpha]-olefin copolymer, wherein the multilayer film has a total free shrink of at least 40% at 85°C. The film preferably includes at least one layer that is cross-linked. Especially when the outer layer includes polyester, which is preferred, the film even more preferably is free of PA, but in principle a variety of thermoplastic polymers including PA are listed for the seal layer. Thus, the outer layers are different from each other.

EP0881966 discloses a thermoplastic multilayer packaging film comprising an oxygen barrier core layer comprising EVOH, two outer layers, and two adhesive layers each of which disposed between the core layer and each of the two outer layers. At least one of the outer layers comprises a blend of three components A, B, and C, wherein component A is a homogeneous or heterogeneous ethylene-α-olefin copolymer with density between 0,915 g/cm³ and 0,925 g/cm³, component B is a homogeneous or heterogeneous ethylene-α-olefin copolymer with a density of more than 0,925 g/cm³, and component C is a homogeneous or heterogeneous ethylene-α-olefin copolymer with a density of less than 0,915 g/cm³. The objective is to improve the heat-seal properties of a film with a gas barrier. The composition of the 2 skin layers does not have to be the same. A specific overall density of the film is neither an objective.

EP4019246 discloses a recyclable multilayer polymer barrier film for food packaging providing a gas and water vapour barrier, wherein the film comprises at least two inner layers, preferably at least four inner layers of EVOH, and two or more layers of PE or PP that encapsulate said at least two EVOH layers, wherein the film comprises at least 5 wt% EVOH based on the total weight of the film. The overall density of the film is not defined. As the film is only oriented in machine direction, there are no teachings regarding the transversal orientation.

US2017239920 discloses a recyclable packaging laminate comprising a first polymeric layer, comprising a PP copolymer or a HDPE and a second polymeric layer comprising a PE resin with a coextruded EVOH compatibilizer. A third layer between the first 2 layers may comprise HDPE. Consistently, the 2 skin layers have different PO compositions. The films are non-oriented.

EP0967073 discloses a biaxially stretched laminate film of at least three layers including a pair of outer layers each comprising a thermoplastic resin, and an intermediate layer disposed between the outer layers, wherein the intermediate layer comprises a PA resin composition comprising an aromatic diamine copolymer and an aromatic diamine polymer, and at least one of the outer layers comprises a PP resin. The mostly PO casing with only 19% PA content supposedly withstands not only the stuffing, cooking & cooling process, but also retorting at 120 °C for 15 min with no ruptures.

WO2023210213 discloses a thermally shrinkable multilayer film consisting of at least three layers: an outer surface layer (a) containing a PO resin, an intermediate layer (b) containing a gas barrier resin, and an inner surface layer (c) containing a PO resin, the multilayer film containing a cyclic olefin copolymer (COC) in at least one layer of the multilayer film, the COC being in a proportion of 15% by mass of the multilayer film.

### Barrier Transfer casings

In the production of meat products, smoke treatment has a long tradition for taste and preservation reasons. In said tradition the smoking of the products in smoking rooms or chambers is widely used. However, in such a case the casings need to be permeable for the smoke, which means that the casing has a low water vapour barrier so that the meat product can lose weight during cooking and storage. To avoid weight loss, the disadvantages of smoking and the use of secondary packaging, the inside of casings, which offer a sufficient barrier to water vapour, has been coated or impregnated with liquid smoke, but also with colour solutions, e.g., solution on a caramel basis, or seasonings.

For such a transfer of functional additives like liquid smoke or caramel solutions onto foodstuff, several casing structures have been described. As inner layers of the casing, some of these structures use hydrophilic materials, which allow the absorbance of the functional additive into the material. To increase the absorbance capacity of the thermoplastic inner layer, formation of pores in that inner skin layer is desirable.

For instance, EP1911352 and US2009214722 disclose multi-layered coextruded stretched thermoplastic food casings comprising at least one porous inner layer, comprising at least one plastic material and at least one filler and at least one pore-forming component of an oily pore-forming agent. The porosity of the porous inner layer has an interconnected porosity such that said innermost porous inner layer can absorb, retain, desorb and to transfer at least one transferable functional additive from the porous inner layer to food encased in said casing. The casings further comprise at least one layer having a barrier effect for water vapour, in the case of US2009214722 A1 for water and/or oxygen. The especially preferred structures and the examples of EP1911352 have outer layers which comprise PA. In the case of US2009214722, the preferred structures have outer and inner layers each made independently from a wide range of thermoplastic polymers, including PA- and PO-based polymers. The examples have PA-based outer layers.

EP3014997 describes a multi-layered oriented barrier casing, whose inner layer has a porosity generated by (co)extruding a first polymer composition comprising a polymer and a supercritical pore-forming agent. The porosity allows absorbing, retaining, desorbing and transferring at least one transferable functional additive from said at least one porous inner layer to food encased in said casing. Also in this case, all examples have a PA-based outer layer. As in the above-mentioned documents, recyclability and its needs like specific overall densities are not objectives for the disclosed sausage casings.

Porosity can be found also inside films, reducing the weight of the film per area at same thickness. There are known different ways of how to create porosity, e.g., the above-mentioned supercritical pore-forming agents, physical or chemical foaming additives or hard polymers as described in WO2012129046 and US2012237743.

They disclose a multi-layer polymeric film comprising at least one polymeric skin layer, one at least indirectly joined polymeric "A" layer comprising 5 to 40 volume percent of a hard polymer, and a polymeric "B" layer with a different composition and/or a different thickness joined to said "A" layer, comprising a 5 to 40 volume percent of a hard polymer. At least one of the hard polymers in the "A" layer and the "B" layer is immiscible and void initiating when the film is stretched. The thickness of the at least one skin layer, or total thickness, if more than one, is from 20 to 60% of the thickness of the multi-layer polymeric film. All layers comprise POs as the matrix material, without asking to have the same composition in 2 polymeric skin layers in case there are two. Being immiscible, the hard polymers represent recycling incompatibilities for the matrix. The objective of the voids is to obtain opaque films without the use of fillers like TiOz and reducing the basis weight of the film, not claiming nor measuring a targeted film density of less than 1,00 g/cm³.

In case all layers are porous, the film becomes more or less permeable to liquids and/or gases. US2004170852 discloses a process for producing a multilayer polyolefinic film having simultaneously the properties of being water vapour permeable and of having a reinforced liquid impermeability, as is often needed, e.g., for diapers, disposable garments or building applications. In this process polyolefinic polymers and/or copolymers mixtures are coextruded, one of which at least containing inorganic fillers. The multilayer precursor film is stretched to form a breathable multilayer film, comprising at least two contiguous layers of same polyolefinic composition, having at least the structure "B"-"B". Further microporous layers of different composition may be added to one side. Consistently, the film does not have a water vapour barrier nor a gas barrier.

As a conclusion, the above high PA-content casing structures do not have a public recycling path, so that the casings end up in incineration or landfill. Regarding the recycling of plastic, especially POs like LDPE, HDPE and PP are sorted out of the waste flow for the recycling processes, with low-contamination fractions preferred for mechanical recycling methods while other fractions may be guided to advanced recycling methods like, e.g., chemical recycling. But POs typically do not have the necessary high stiffness at cooking conditions, so that sausages, stuffed in conventional PO-based casings, show wrinkles after having been cooked and cooled down. However, wrinkles are associated by the consumer with a non-fresh product.

All the above-described purely PO-based films focus on packaging applications at or below room temperature. They are not able to survive a cooking application in such a way that the obtained sausage is wrinkle-free after cooking. The described structures are not encountered in the sausage industry.

The present invention provides casings that solve all the above-mentioned drawbacks. Due to the PO-based composition of both the inner and the outer skin layers, the casings of the invention can be sorted to the public recycling path of specific POs, and through a combination of material selection and definition of properties, they achieve wrinkle-free sausages after the cooking and cooling steps.

Further, the casing of the invention seeks to provide a high strength for their intended use as well as the capacity for transferring food additive such as flavours. Therefore, the present invention provides a multi-layered coextruded bi-axially oriented thermoplastic food casing having a high strength and optionally excellent capability of transferring food additives to the enclosed foodstuff, wherein said thermoplastic food casing has a predominant PO-content, resulting in a high recyclability of the structure, and a high stiffness in transversal direction without crosslinking any of the thermoplastic layers.

### SUMMARY OF THE INVENTION

The main object of the invention is a recyclable multi-layered coextruded bi-axially oriented thermoplastic food casing with more than 50% by weight PO content which comprises two skin layers, an outer skin layer and an inner skin layer which are essentially based on the same PO type and where the inner skin layer is optionally porous, and in-between of the two skin layers:
∘ at least one non-skin layer, which comprises at least one thermoplastic component with a density of more than 1,00 g/cm³,
∘ optionally at least one non-skin layer comprising at least one thermoplastic component with a density of below 0,915 g/cm³ or having at least a total layer density of below 0,915 g/cm³,
wherein
- the PO type of the two skin layers has a melting temperature above 105°C and below 170°C, and is selected from the group consisting of LDPE, HDPE and PP,
- the at least one thermoplastic component with a density of more than 1,00 g/cm³ is selected from the group consisting of:
   ∘ amorphous thermoplastic polymers with a glass transition temperature above 50°C and below 160°C, such as COC or amorphous PA,
   ∘ PA with a melting temperature above 160°C and below 250°C,
   ∘ EVOH, and
   ∘ PVOH
- the at least one thermoplastic component with a density of below 0,915 g/cm³ is selected from the group consisting of PP and copolymers of ethylene selected from ULDPE, VLDPE and POP, and
- the at least one non-skin layer having a total layer density of below 0,915 g/cm³ comprises at least one thermoplastic component with a density of below 0,915 g/cm³ and/or is a porous layer
and wherein:
- the overall density of the casing is below 1,00 g/cm³, and
- a ratio of stiffness in transversal direction to stiffness in machine direction is higher than 1.

It is also an object of the invention, a method for producing such a multilayered thermoplastic food casing.

Finally, it is another object of the invention the use of the casing for stuffing and wrapping meat products and other foodstuff products. The main application of the casing is for cooked sausages.

### BRIEF DESCRIPTION OF THE FIGURES

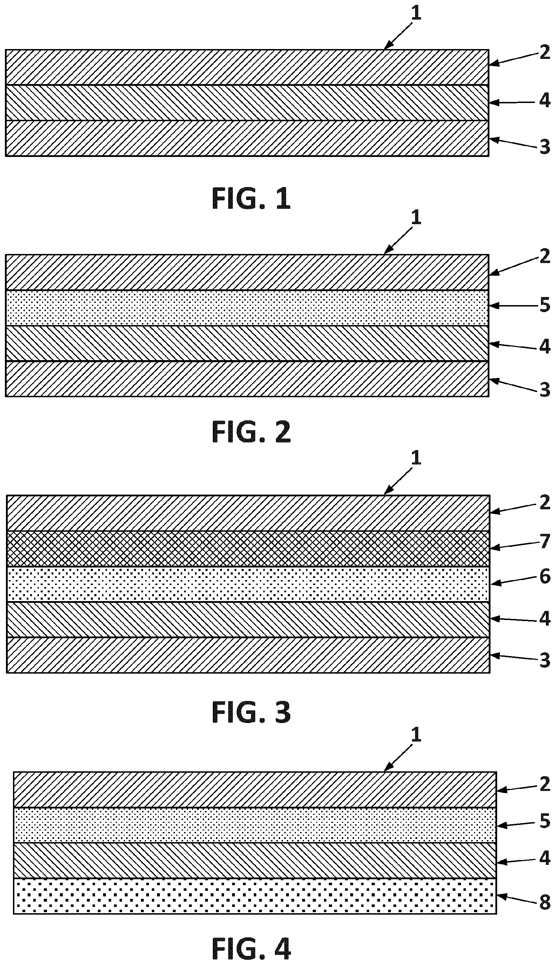

**Figure 1** represents a preferred embodiment of the casing (1) according to the present invention, comprising outer skin layer (2), inner skin layer (3) of the same PO type as the outer skin layer, and one non-skin layer (4) comprising at least one thermoplastic component with a density of more than 1,00 g/cm³. Optionally the one non-skin layer (4) may also comprise at least one component with a density of below 0,915 g/cm³ and/or porosity.
**Figure 2** represents another preferred embodiment of the casing (1) according to the present invention, comprising outer skin layer (2), inner skin layer (3) of the same PO type as the outer skin layer, one non-skin layer (4) comprising at least one thermoplastic component with a density of more than 1,00 g/cm³, and one non-skin layer (5) comprising at least one component with a density of below 0,915 g/cm³ and/or porosity between outer skin layer (2) and the non-skin-layer (4).
**Figure 3** represents another preferred embodiment of the casing (1) according to the present invention, comprising outer skin layer (2), inner skin layer (3) of the same PO type as the outer skin layer, one non-skin layer (4) comprising at least one thermoplastic component with a density of more than 1,00 g/cm³, one non-skin layer (6) comprising porosity, and one coloured non-skin layer (7) between outer skin layer (2) and the non-skin layer (6).
**Figure 4** represents another preferred embodiment of the casing (1) according to the present invention, comprising outer skin layer (2), inner skin layer (8) of the same PO type as the outer skin layer, which is porous for absorbance and later transfer of functional additives, one non-skin layer (4) comprising at least one thermoplastic component with a density of more than 1,00 g/cm³, and one non-skin layer (5) comprising at least one component with a density of below 0,915 g/cm³ and/or porosity.

### DETAILED DESCRIPTION OF THE INVENTION

### THE CASING

As explained before, a main aspect of the invention is a recyclable multi-layered coextruded bi-axially oriented thermoplastic food casing with more than 50% by weight PO content which comprises two skin-layers, an outer skin layer and an inner skin layer which are essentially based on the same PO type and where the inner skin layer is optionally porous, and in-between of the two skin layers:
∘ at least one non-skin layer, which comprises at least one thermoplastic component with a density of more than 1,00 g/cm³,
∘ optionally at least one non-skin layer comprising at least one thermoplastic component with a density of below 0,915 g/cm³ or having at least a total layer density of below 0,915 g/cm³,
wherein
- the PO type of the two skin layers has a melting temperature above 105°C and below 170°C, and is selected from the group consisting of LDPE, HDPE and PP,
- the at least one thermoplastic component with a density of more than 1,00 g/cm³ is selected from the group consisting of:
   ∘ amorphous thermoplastic polymers with a glass transition temperature above 50°C and below 160°C, such as COC or amorphous PA,
   ∘ PA with a melting temperature above 160°C and below 250°C,
   ∘ EVOH, and
   ∘ PVOH
- the at least one thermoplastic component with a density of below 0,915 g/cm³ is selected from the group consisting of PP and copolymers of ethylene selected from ULDPE, VLDPE and POP, and
- the at least one non-skin layer having a total layer density of below 0,915 g/cm³ comprises at least one thermoplastic component with a density of below 0,915 g/cm³ and/or is a porous layer
and wherein:
- the overall density of the casing is below 1,00 g/cm³, and
- a ratio of stiffness in transversal direction to stiffness in machine direction is higher than 1.

For the sake of clarity some definitions are provided that help the reader in understanding some terms in the context of the present invention.

**"Recyclable":** in the context of the invention, it refers to the capacity of casing to be sorted into a PO recycling path, especially but not exclusively via NIR-sensors. The floatability properties of the casing in water medium also contribute to the recyclability of the casing of the invention.

"Multi-layered (co)extruded thermoplastic food casing" comprises tubular casings, which have been coextruded by means of an annular die, and flat films or cut-open tubular casings, which are sealed to form a tubular casing, and bags made thereof. In a preferred embodiment the multi-layered (co)extruded thermoplastic food casing is a seamless tubular multi-layered coextruded bi-axially oriented thermoplastic food casing.

"Bi-axially oriented": in the context of the invention, it refers to a film which has passed an orientation process, which stretches the original sheet or tube in at least 2 directions, typically in machine direction and in transversal direction, at the same time or in a sequence.

**"Polyolefin" (PO)** and **"Polyolefin type":** it refers to a group of thermoplastic materials generally based on the general formula (CH₂CHR)ₙ where R is an alkyl group. In the context of the invention, it mainly refers to PE and PP polymers and copolymers. PO types are classified according to the recycling codes HDPE ("2"), LDPE ("4") or PP ("5"). HDPE refers to High-Density Polyethylene, whose grades typically have a density from 0,940 g/cm³ to 0,970 g/cm³. LDPE refers to Low-Density Polyethylene, whose grades typically have a density from 0,915 g/cm³ to 0,939 g/cm³. The type LDPE includes Linear Low-Density Polyethylene (LLDPE). Sometimes MDPE is mentioned, whose grades have densities between 0,925 g/cm³ and 0,945 g/cm³, thus being part of HDPE or LDPE depending on the density of the grade. PE with a density below 0,915 g/cm³ is called Very Low-Density Polyethylene (VLDPE) or Ultra Low-Density Polyethylene (ULDPE) or Polyolefin Plastomer (POP). PP refers to Polypropylene and its copolymers, whose grades typically have a density from 0,895 g/cm³ to 0,930 g/cm³, depending very much on the tacticity and the copolymer content of the PP.

The expression **"higher than 50% by weight polyolefin content"** refers to the weight of all polyolefinic components in relation to the total weight of the casing of the invention. A component is considered polyolefinic if its chemical repetitive constitutional unit of the polymer are the monomers of at least one PO type as defined above.

**"Skin layers"** refers to the layers with one of its surfaces not adjacent to another layer of the casing. A casing has typically 2 skin layers, one inner skin layer in contact to the enclosed foodstuff, and one outer skin layer without contact to the foodstuff. Often, skin layers are called inner layer or outer layer.

**"Non-skin layer"** refers to layers which are directly or indirectly sandwiched between the 2 skin layers. Often, non-skin layers are called core layers.

**"Essentially based"** according to the present invention means that the such described accompanying polymer material is present in said layer or casing in a weight ratio of at least 55 weight-%, preferably at least 70 weight-%, more preferably at least 80 weight-%, even more preferably at least 90 weight-%, most preferably in a range of from 90 to 95 weight-% based on the weight of the thermoplastic polymer material used for forming said layer (not including other additives such as fillers, pigments, processing aids, anti-blocking agents, slip agents, pore-forming agents or functional additives).

**"Overall density"** refers to the density of the casing in g/cm³ as calculated from the layer-thickness weighted average of the density of the individual layers, which in turn is calculated from the weighted average of the density of the components as documented in their Technical Data Sheets as issued by the respective supplier, in case of a porous layer with the porosity not open to the outer surfaces of the skin layers of the casing multiplied by the ratio of theoretical non-porous thickness of the layer based on material consumption in extrusion to the actual thickness of the layer determined by light-microscopy.

**"Layer density" or "total layer density"** refers to the density of the layer in g/cm³ as calculated from the weighted average of the density of the components as documented in their Technical Data Sheets as issued by the respective supplier, in case of a porous layer with the porosity not open to the outer surfaces of the skin layers of the casing multiplied by the ratio of theoretical non-porous thickness of the layer based on material consumption in extrusion to the actual thickness of the layer determined by light-microscopy.

**"Stiffness"** according to the present invention refers to the tensile secant modulus between 0,5% and 4,5% elongation, measured according to ISO 527-1:2019 using an initial gauge distance of 100 mm, when pulling a conditioned (24 h at testing condition) rectangular specimen of 25 mm width and 150 mm length, clamped in a tensile testing machine, with a constant travers speed of 100 mm/min under testing condition 23°C and 50% relative humidity.

**"Melting temperature"** refers to the melting temperature as documented in the Technical Data Sheet of the material as issued by the respective supplier. Alternatively, as determined in accordance with ISO 11357-3 using a sample weight of approx. 3 mg and a heating rate of 10 K/min under nitrogen.

**"Glass transition temperature"** according to the present invention refers to the glass transition temperature as documented in the Technical Data Sheet of the material as issued by the respective supplier. Alternatively, as determined in accordance with ISO 11357-2 using a sample weight of approx. 3 mg and a heating rate of 10 K/min under nitrogen.

**"An oxygen barrier effect"** according to the present invention means that the coextruded thermoplastic food casing shows an oxygen transmission rate through the food casing of the present invention of 30 cm³/(m² d bar) or less, preferably of less than 20 cm³/(m² d bar), often in the range of 6 to 12 cm³/(m² d bar), sometimes of about 0,1 or about 1 to less than 6 cm³/(m² d bar) when tested according to DIN 53380-3 at 23°C and 50% relative humidity. These values are not achievable for a casing which is purely based on POs alone.

**"Porous layer"** refers to a layer, which has a lower density when calculated with the actual volume of the layer in the casing of the invention than it would be implied by the (non-porous = bulk) densities of the components of the layer. A porous layer can be generated by coextruding a polymer composition comprising a material blend which performs phase separation when elongated, a β-nucleated PP or a supercritical, a physical and/or a chemical pore-forming agent. This variability becomes applicable in the casing of the invention because in the casing of the invention there is a high content of PO available for introducing porosity. Porous layers comprise porosity which, depending on the desired effect in the casing of the invention, can
- reduce the overall density of the casing if the porosity is not open to the outer surfaces of the skin layers of the casing, and/or
- absorb and/or adsorb a functional additive into and/or onto the porous layer at room temperature (25°C) and atmospheric pressure (1 bar) if the porosity is open to an outer surface of the casing, and/or
- increase the opacity of the casing if the pores are refracting the light
- create a rough outer surface for a natural touch and/or matt look, and/or
- create visual effects if the pores permit to see through the porous layer.

According to the present invention the non-porous layers may also be named as **"bulk layers".**

Two of the most relevant features of the present invention is that the two skin-layers of the casing of the invention have essentially the same type of PO, attributable to one of the recycling codes HDPE ("2"), LDPE ("4") or PP ("5"). This dramatically increases the PO content of the whole casing. In a particular embodiment, the PO comprises PP, PP random or block copolymers with PE, or β-crystallized PP. In addition, the casing has an overall density of below 1,00 g/cm³. These two features make it possible that the casing can be detected as a PO film in the public recycling paths for HDPE, LDPE and PP and make them highly recyclable.

Despite the problems caused by casings having POs as skin layers when subjected to cooking, it was also surprisingly found that it was finally possible to achieve wrinkle-free sausages after cooking and cooling when assuring the presence of a skin-layer PO with a melting temperature sufficiently above cooking temperatures, preferably having a melting temperature above 105°C and below 170°C, the addition of a thermoplastic component of a density of more than 1,00 g/cm³ into a non-skin layer as well as the extrusion of the casing with a ratio of stiffness in transversal direction to stiffness in machine direction of larger than 1. The resulting increase of the overall density of the casing in comparison to the density of a casing which consists only of the selected PO type, is possible to compensate partially or even completely by introducing at least one non-skin layer having a layer density of below the density of the PO type of sufficient thickness and/or by sufficiently adding at least one component with a density of below 0,915 g/cm³.

In addition, the selection of the at least one component from the group of COC, PA, EVOH and PVOH allowed to adjust the barrier properties to application requirements and even made the casing shirrable.

In general, the casing of the invention can be widely adjusted to the needs of the application. For example, in a preferred embodiment one of the skin-layers can be extruded as a porous layer, so that the food casing can absorb functional additives, which are transferred to the foodstuff during the cooking process. This porosity is accessible from the outside and may absorb, e.g., water in a floating step of a recycling process. Thus, the porosity of skin layers and the porosity of non-skin layers, which are directly adjacent to a porous skin layer, do not contribute to a porosityinduced reduction of the overall density of the casing. Only the porosity of non-skin layers without connectivity to the casings surface help to compensate density increase caused by high-density components in the casing.

In a further embodiment, to enhance meat cling for a reduction of purge and/or ink adhesion for an improved printability, one or both skin layers may be corona treated and/or contain COC. Anti-block additives and/or inorganic particles, e.g., to avoid blocking due to the corona treatment and/or for a rough outer skin-layer, respectively, or for an increased thermal stability, and/or colour pigments can be added without endangering the flotation in a recycling process, because the increase of the overall density of the casing can be compensated by a correspondingly sufficient addition of a component with a density of below 0,915 g/cm³ and/or by incorporation of a porous non-skin layer. In contrast to PA-based inner skin layers, which inherently have a strong adhesion to protein-based foodstuff, the adhesion of the PO-based inner skin layer of the casing of the invention to the foodstuff can be adjusted by applying corona treatment according to the needs of the application.

In a preferred embodiment said predominant PO content comprises PP, PP random or polypropylene block copolymers (BCPP), and/or β-crystallized PP.

In another preferred embodiment said at least one thermoplastic component with a density of below 0,915 g/cm³ is selected from the group of ethylene alpha olefin copolymers, often called POP, ULDPE or VLDPE, being copolymerized with butene, hexene or octene. In contrast to prior art claiming exceptional sealability by means of low melting polyolefins in the inner skin layer, the casing of the invention optionally positions the thermoplastic components with a density of below 0,915 g/cm³ in a non-skin layer, so that the melting temperature of the inner skin layer is significantly above the cooking temperature, making the casing of the invention usable as a casing for cooked sausages. Thus, when VLDPE, ULDPE and/or POP are used in the casing of the invention, the inner skin layer has a higher melting point than at least one component of the non-skin layers.

In a further preferred embodiment said multi-layered coextruded bi-axially oriented thermoplastic food casing comprises at least one layer comprising at least one thermoplastic material with a density of more than 1,00 g/cm³, which has an oxygen barrier effect. Such a material can be EVOH or PA. If the casing contains EVOH, the gas barrier often required in sausage applications can be achieved without the need for PA. In comparison with casings, which do not have a thermoplastic component with a density of more than 1,00 g/cm³, the casing of the invention has a higher thermal stability due to the thermoplastic component with a density of less than 1,00 g/cm³.

In a further preferred embodiment said multi-layered coextruded bi-axially oriented thermoplastic food casing comprises at least one layer containing COC. If the casing contains COC, it was observed that the natural shrinkage of a biaxially-oriented casing at ambient temperatures was reduced and the stiffness at elevated temperatures like cooking temperatures was increased. In addition, surprisingly the shirrability of the casing was improved.

The present inventors have found that if the at least one layer containing COC comprises a (co)polyolefin as a main component and at least 5 weight-% of COC, the properties of the multi-layered coextruded thermoplastic food casing with respect to a reduced formation of wrinkles on the final sausage can be further improved.

In yet another preferred embodiment said multi-layered coextruded bi-axially oriented thermoplastic food casing comprises at least one non-skin layer containing at least one aliphatic PA or CoPA with a melting temperature above 160°C and below 250°C, preferably below 230°C, more preferably below 200°C, and/or at least one amorphous PA with a glass transition temperature above 50°C and below 160°C. While PA generally improves the oxygen barrier of the casing, it also increases the stiffness at elevated temperatures like cooking temperatures, especially if the casing comprises amorphous PA. Surprisingly, also the shirrability of the casing is improved by the addition of amorphous PA. Having the PA in non-skin layers of the casing according to the invention, embedded by 2 PO-based skin layers, protects the PA from ambient humidity, thus reducing the natural shrink of the biaxially oriented casing, maintaining a higher oxygen barrier under humid conditions, and better maintaining the stiffness of the casing during cooking than for casings of the same thickness with PA-based skin layers.

In a preferred embodiment the casing of the invention comprises at least one layer containing PVOH as a thermoplastic component with a density of more than 1,00 g/cm³. When adding PVOH, the oxygen barrier is improved, while the water vapour barrier is reduced. This addition of PVOH may be helpful when the sausage casing shall be permeable to smoke.

Typically, casings according to the invention have an exceptionally high water vapour barrier in comparison to conventional sausage casings of the same thickness with PA-based skin layers because of the high PO content, thus reducing the loss of weight before the end of the shelf-life of the foodstuff. The water vapour barrier of the casing of the invention results in a water vapour transmission rate of 0,01 to 500 g/m²d, preferably 0,1 to 100 g/m²d, more preferably 1 to 20 g/m²d, even more preferably 1 to 10 g/m²d at 23°C and 85% relative humidity according to ASTM E398-03.

If the thermoplastic material of the inside layer has a lower melting temperature than at least one non-skin layer, the casing is sealable without the risk of sealing through the entire thickness of the casing, so that the structure is well-suited for the preparation of bags.

In a preferred embodiment, the casing of the invention has a porous non-skin layer between the outer skin layer and the outermost non-skin layer comprising at least one thermoplastic component with a density of more than 1,00 g/cm³. The porosity of said porous non-skin layer can be generated by coextruding a polymer composition comprising a material blend which performs phase separation when elongated, a β-nucleated PP or a supercritical, a physical and/or a chemical pore-forming agent. Surprisingly, it was found that in the orientation step the porous layer was noticeably thicker when stretched with only PO-based layers following towards the outside of the casing than when stretched with at least one layer comprising at least one thermoplastic component with a density of more than 1,00 g/cm³ between said porous non-skin layer and the outer skin layer.

In another preferred embodiment, the casing of the invention has a coloured non-porous non-skin layer between the outer skin layer and a porous non-skin layer with a porosity, having pores of such small dimension that the light is refracted by the porosity and the porous layer appears white without the addition of a white pigment or any other pigment or filler. Again, the porosity of said porous non-skin layer can be generated by coextruding a polymer composition comprising a material blend which performs phase separation when elongated, a β-nucleated PP or a supercritical, a physical and/or a chemical pore-forming agent. It was found that the opacity of the casing was greatly improved by the porous layer, thus preventing that the colour of the foodstuff influences the seen-from-the-outside colour tone of the coloured non-porous non-skin layer.

In even another preferred embodiment, the casing of the invention has a coloured porous layer with a porosity, having pores of large dimension, which allows for a visibility - from the outside of the casing - of the foodstuff or of a coloured and/or porous layer behind the coloured porous layer, i.e., closer to the inside of the casing.

In a further preferred embodiment, the casing comprises at least one porous layer, absorbing functional substances, which can be transferred onto the contacting foodstuff. The porosity of said porous skin layer can be generated by coextruding a polymer composition comprising a material blend which performs phase separation when elongated, a β-nucleated PP or a supercritical, a physical and/or a chemical pore-forming agent.

Surprisingly, it was found that, although at room temperature PA is much stronger than PO, in water at 80°C conventional PA-based casings and the PO-based casings according to the invention show similar creep without the need for crosslinking and similarly show no wrinkles in the kitchen. For the stuffing, the casings of the invention do not even have to be soaked, which is in contrast to PA-based casings of similar overall thickness.

The multilayered casing of the present invention has an overall thickness of 20 to 90 µm, preferably 40 to 70 µm if not containing a porous layer, and 25 to 400 µm, preferably 40 to 300 µm, more preferably 50 to 200 µm if containing at least one porous layer.

The multilayered casing of the present invention is preferably in tubular form, but it can have the form of a flat film.

A detailed description of the different types of layers present in the multilayered casing of the invention, as well as the possible composition thereof and the main features defining them is presented in the following paragraphs. Also, the possible arrangement of layers within the multilayered casing of the invention is discussed.

### The skin layers

The recyclable multi-layered coextruded bi-axially oriented thermoplastic food casing according to the invention comprises two skin-layers, which are essentially based on the same PO type. The PO type of the two skin layers must have a melting temperature above 105°C and below 170°C, and is preferably selected from the group consisting of HDPE, LDPE, and PP. These PO types consist of PEs, PPs, copolymers comprising ethylene and/or propylene and/or linear alpha-olefins with 3 to 8 C-atoms, and copolymers to be used for an optional adhesive layer as described below. Mixtures of these thermoplastic polymers can be used as well. The more preferred copolymers are those comprising C2/C3 or C2/C8 PO copolymers or a combination of these.

In a particular embodiment, PO comprises PP, PP random or block copolymers with PE, or β-crystallized PP.

HDPE refers to High-Density Polyethylene, whose grades typically have a density from 0,940 g/cm³ to 0,970 g/cm³.

LDPE refers to Low-Density Polyethylene, whose grades typically have a density from 0,915 g/cm³ to 0,939 g/cm³. In addition, the type LDPE comprises grades which are LLDPE.

PP refers to Polypropylene and its copolymers, whose grades typically have a density from 0,895 g/cm³ to 0,930 g/cm³, sometimes up to 0,945 g/cm³, depending very much on the tacticity, degree of crystallinity and the copolymer content of the PP.

Although neither preferred nor needed for the casing of the invention, also skin layers may additionally contain PE with a density below 0,915 g/cm³, which is called VLDPE or ULDPE or POP. Where necessary, compatibilizers can be added to the POs. Compatibilizers can for example be selected from the group consisting of copolymers of ethylene and vinyl acetate (EVA), ethylene and acrylic acid (EAA), ethylene and methacrylic acid (EMAA), ethylene and methyl acrylate (EMA), ionomers and/or anhydride modified POs.

Furthermore, the skin layers may optionally contain COC, a dye, a fine-grained pigment or both which may be used for the colouring and/or for the UV protection of such casings. The skin layer, therefore, may optionally be coloured. Also slip and/or anti-blocking additives may be added. Especially the latter are preferred to be added in the case a corona treatment of the skin layer shall be carried out. One or both skin layers may be treated by a corona discharge. In case that COC is present in a skin layer a surface treatment may not be necessary, as in general COCs comprise high surface tension levels.

Often, the skin layers made from these PO types have a good adhesion to an adjacent non-skin layer with one component of density smaller than 1,00 g/cm³ or a layer density of density smaller than 1,00 g/cm³ so that there is no necessity to add an adhesion promoter to the skin layer or such an adjacent non-skin layer or to include an adhesion layer between those layers. But it may be preferred in some embodiments that the skin layer includes at least one adhesion promoter (as described below as a component of at least one optional adhesive layer), especially if there is a non-skin layer with one component of a density of more than 1,00 g/cm³ or another functional layer adjacent which does not comprise (an) adhesion promoter(s).

As the skin layers are made of thermoplastic POs, which are non-polar materials, these layers have a good barrier effect for water vapour. Water vapour transmission rate of 0,01 to 500 g/m²d, preferably 0,1 to 100 g/m²d, more preferably 1 to 20 g/m²d, even more preferably 1 to 10 g/m²d at 23 °C and 85% relative humidity according to ASTM E398-03 are considered a good barrier effect for water vapour. If the food casing according to the invention shows a water vapour transmission rate of 20 g/m²d or less, then the encased foodstuff does not easily lose its moisture and the encased meat products stay fresh for extended time periods. Especially for sausages, the exudation of meat juice originating from the food through the casing wall is efficiently prevented.

Additionally, the skin layers can provide strength (especially if made from materials of the polymer type HDPE or PP), printability (if corona treated) and/or protection against external damage. The water vapour barrier properties furthermore prevent that optionally absorbed/adsorbed substances migrate to the outside of the casing during cooking and storage.

If at least one of the skin layers is treated with a surface treatment, e.g., a corona discharge, preferably, this treatment is conducted in such a way that after the treatment the wetting tension of the layer surface is 35 mN/m or higher, preferably 40 mN/m or higher, and more preferably 50 to 60 mN/m, as measured by testing inks according to DIN ISO 8296 for the determination of the wetting tension of plastic films. The conditions of a corona discharge are not limited and may be suitably determined according to the type, thickness and feeding rate of the casing to be processed. In case the inner skin-layer is porous, as the porosity influences the wetting tension to be provided, the setting of the parameters of the corona treatment device should be done with a casing having a non-porous skin layer having the same polymer composition as the composition of the porous skin layer used according to the invention.

The combined layer thickness of the skin layers is in a range of from 5 to 100 µm, preferably between 10 and 50 µm, depending on the required PO content in the casing (which is in any case more than 50% by weight), the strength, the barrier property and/or the puncture/tear resistance to be achieved by the layers. The combined layer thickness can be distributed onto the skin layers in any ratio, preferably in a ratio between 20% : 80% and 50% : 50%. Especially the latter end of the range is helping to reduce curling.

### The non-skin layer with one component of density higher than 1,00 g/cm³

The recyclable multi-layered coextruded bi-axially oriented thermoplastic food casing according to the invention, comprises at least one non-skin layer, which comprises at least one thermoplastic component with a density of more than 1,00 g/cm³. The at least one thermoplastic component with a density of more than 1,00 g/cm³ is selected from the group of amorphous thermoplastic polymers with a glass transition temperature above 50°C and below 160°C, e.g., COC or amorphous PA, PA with a melting temperature above 160°C and below 250°C, EVOH, and PVOH.

The group of amorphous thermoplastic polymers with a glass transition temperature above 50°C and below 160°C comprises COC which refers to a polymer derived from at least one cyclic and at least one acyclic olefin. The acyclic olefin is an alpha-olefin having two or more but typically not more than twenty carbon atoms, preferably ethylene, while the cyclic olefin comprises at least 4 carbon atoms and an unsaturated site for coordinated polymerization with the acyclic olefin and have been made using a metallocene catalyst to obtain copolymers with crystalline properties.

The group of amorphous thermoplastic polymers with a glass transition temperature above 50°C and below 160°C further comprises amorphous PA such as amorphous polyphthalamides (PPA), especially partially aromatic copolyamides PA6-I/6-T, PA6/6-I (I = isophthalic acid, T = terephthalic acid).

The PA with a melting temperature above 160°C and below 250°C comprise aliphatic PAs such as PA6, PA11, PA12; aliphatic copolyamides such as PA6/66, PA66/6, PA6/69, PA6/9, PA6/10, PA6/12, polyether amides, polyester amides, polyether ester amides, polyamide urethanes, poly(ether-block-amides); semicrystalline partially aromatic polyamides (e.g., PA6-T copolymers), Nylon-MXD-6 (polycondensate of m-xylylenediamine and adipic acid); especially preferred components are PA6, PA 12, PA6/66 or Nylon-MXD-6 or any combination thereof. In an even more preferred embodiment PA6 and PA6/66 can be used. Especially preferred mixtures contain at least two different substances of these components.

A further member of the group of the at least one thermoplastic component with a density of more than 1,00 g/cm³ is EVOH, which may optionally be partially or totally saponified.

Even another member of the group of the at least one thermoplastic component with a density of more than 1,00 g/cm³ is PVOH which are water-soluble or hot water-soluble synthetic organic polymeric materials and may optionally be partially or totally saponified.

Further suitable plastic materials for forming such layers include vinylidene chloride copolymers (PVDC), for example with vinyl chloride or (meth)acrylate as comonomers or a mixture of these. These polymers may be admixed with additives, such as softeners or other organic polymers. The compositions and other properties of more than one layer comprising at least one thermoplastic component with a density of more than 1,00 g/cm³ within one casing are independent from one another, although they may be partially or totally identical. In one embodiment of the casing according to the invention, said layer may comprise at least one adhesion promoter as described below as a component of at least one optional adhesive layer. The adhesion promoter functions as a compatibilizer.

According to the present invention the thermoplastic component with a density of more than 1,00 g/cm³ is present in the described at least one non-skin layer containing said component in a weight ratio of at least 30 weight-%, preferably at least 50 weight%, more preferably at least 70 weight-%, even more preferably at least 80 weight-%, most preferably in a range of from 90 to 95 weight-% based on the weight of the thermoplastic polymer material used for forming said layer (not including other additives such as fillers, pigments, processing aids or pore-forming agents).

Optionally, the food casing according to the present invention further comprises at least one non-skin adhesive layer which will be described in more detail below. Said optional at least one non-skin adhesive layer can be in direct contact with a non-skin layer comprising at least one thermoplastic component with a density of more than 1,00 g/cm³ on at least one side of the layer comprising at least one thermoplastic component with a density of more than 1,00 g/cm³, especially if the adjacent non-skin layer comprising at least one thermoplastic component with a density of more than 1,00 g/cm³ is not a layer comprising an adhesion promoter.

As these thermoplastic components with a density of more than 1,00 g/cm³ in the non-skin layers have a higher density than the polyolefinic components of the casing of the invention, a non-skin layer with at least one such component therein has an oxygen barrier effect. As a consequence, the casing according to the invention can have a barrier for oxygen or other gases or both, showing preferably an oxygen gas transmission rate (OTR) through the food casing of the present invention of 30 cm³/(m² d bar) or less, preferably of less than 20 cm³/(m² d bar), often in the range of 6 to 12 cm³/(m² d bar), sometimes of about 0,1 or about 1 to less than 6 cm³/(m² d bar) when tested according to DIN 53380-3 at 23 °C and 50% relative humidity. If the multi-layered coextruded thermoplastic food casing according to the present invention is to be used for fermenting products and/or cheese, the permeability for gases such as oxygen may be desired and, thus, the above-mentioned components of these non-skin layers and their content therein can be selected in such a way that larger OTR than mentioned above are achieved.

The non-skin layer, which comprises at least one thermoplastic component with a density of more than 1,00 g/cm³ and selected from the described group of materials with a high glass transition temperature and/or a high melting temperature, provides strength and stiffness, especially at elevated temperatures like cooking temperatures. The oxygen barrier properties furthermore prevent that the organoleptic properties of the foodstuff change during cooking and storage because of oxidation, e.g., of fats, creating rancidity.

The layer thickness of the at least one non-skin layer, which comprises at least one thermoplastic component with a density of more than 1,00 g/cm³, can be in a range of from 1 to 40 µm, preferably 2 to 30 µm, more preferably 3 to 15 µm. With said layer thickness, the at least one non-skin layer, which comprises at least one thermoplastic component with a density of more than 1,00 g/cm³, is smaller in comparison to the combined thickness of the other layers of the casing according to the invention including the skin layers.

### The non-skin layer with one component or a layer density of density smaller than 0,915 g/cm³

The recyclable multi-layered coextruded bi-axially oriented thermoplastic food casing according to the invention, contains optionally at least one non-skin layer comprising at least one thermoplastic component with a density of below 0,915 g/cm³ or having a layer density of below 0,915 g/cm³. The at least one thermoplastic component with a density of below 0,915 g/cm³ is selected from the group of PP and copolymers of ethylene selected from ULDPE, VLDPE and POP, and the optional at least one non-skin layer having a layer density of below 0,915 g/cm³ comprises at least one thermoplastic component with a density of below 0,915 g/cm³ and/or is a porous layer.

ULDPE, VLDPE and POP are ethylene-alpha olefin copolymers, which achieve their specific property profile through the type of comonomer, the content of the comonomer and the catalyst system, using e.g., metallocene catalysts. Common to these materials for the purpose of the invention is their polyolefinic nature and the low density in the range of 0,870 to 0,914 g/cm³. Being a type of LLDPE, a VLDPE has an increased comonomer content, which often is butene, still using low pressure polymerization and metallocene catalysts. In comparison to VLDPE, ULDPE often has octene as the comonomer content is very similar to VLDPE except that it uses a higher performing octene comonomer. The term Polyolefin Plastomer (POP) emphasizes that via the copolymerization with butene, hexene or octene the PO obtains more and more elastomeric properties without actual cross-linking. Although POP may contain any of these monomers, typical grades have an octene comonomer content. In all cases the comonomer content provides for lower crystallinity and lower density than are typical for standard LLDPE grades.

PP of a density below 0,915 g/cm³ is another option for the at least one thermoplastic component with a density of below 0,915 g/cm³ in at least one non-skin layer. PP and its copolymers with (poly)ethylene are especially preferred if the skin layers are based on PP, so that the overall content of PP in the casing is increased. In case the skin layers are based on PE, the at least one thermoplastic component with a density of below 0,915 g/cm³ in at least one non-skin layer is preferred to be ULDPE, VLDPE and/or POP.

According to the present invention the at least one thermoplastic component with a density of less than 0,915 g/cm³ is present in the described optional at least one non-skin layer containing said component in a weight ratio of at least 30 weight-%, preferably at least 50 weight-%, more preferably at least 70 weight-%, even more preferably at least 80 weight-%, most preferably in a range of from 90 to 95 weight-% based on the weight of the thermoplastic polymer material used for forming said layer (not including other additives such as fillers, pigments, processing aids or pore-forming agents). The content depends on the to-be-achieved overall density of the casing, as the addition of the component with a density of less than 0,915 g/cm³ shall compensate the density increase induced by the content of the at least one thermoplastic component with a density of more than 1,00 g/cm³ and by further organic or inorganic components with higher density (e.g., fillers) in the casing.

Further inorganic or organic materials can be present in the optional non-skin layer comprising at least one thermoplastic component with a density of below 0,915 g/cm³.

However, said components have a high compatibility with other PO materials, so that the combination with POs is preferred, especially preferred with PPs or PEs. In one embodiment of the casing according to the invention, said layer may comprise at least one adhesion promoter as described below as a component of at least one optional adhesive layer. The adhesion promoter functions as a compatibilizer.

Although it is an embodiment of the casing according to the invention that the at least one non-skin layer comprising the at least one thermoplastic component with a density of more than 1,00 g/cm³ and the optional at least non-skin layer comprising at least one thermoplastic component with a density of less than 0,915 g/cm³ are the identical same non-skin layer, it is a preferred embodiment that the at least one thermoplastic component with a density of more than 1,00 g/cm³ and the at least one thermoplastic component with a density of less than 0,915 g/cm³ are in separate non-skin layers, so that the strength function and the barrier function of the at least one non-skin layer, which comprises at least one thermoplastic component with a density of more than 1,00 g/cm³, is not weakened or reduced by the presence of the at least one thermoplastic component with a density of less than 0,915 g/cm³ in said layer.

The optional non-skin layer comprising the at least one thermoplastic component with a density of below 0,915 g/cm³ can easily adhere to other polyolefinic skin or non-skin layers. Optionally, the food casing according to the present invention may further comprise at least one non-skin adhesive layer which will be described in more detail below. Said optional at least one non-skin adhesive layer can be in direct contact with the non-skin layer comprising at least one thermoplastic component with a density of less than 0,915 g/cm³ on at least one side of the said layer, especially if an adjacent non-skin layer comprises at least one thermoplastic component with a density of more than 1,00 g/cm³ but not an adhesion promoter.

As the at least one thermoplastic component with a density of below 0,915 g/cm³ is selected from the group of PP and copolymers of ethylene like so-called ULDPE, VLDPE and POP, which are non-polar POs, the optional at least one non-skin layer has a good barrier effect for water vapour if said POs are present and the non-skin layer is not porous. However, due to the low density of said POs, their content does not contribute to the oxygen barrier of the casing. Even more so, if the layer is porous, then the layer is permeable or at least has a very low barrier to water vapour and oxygen.

As mentioned above, the component with a density of less than 0,915 g/cm³ has the function to compensate the density increase induced by the content of the at least one thermoplastic component with a density of more than 1,00 g/cm³ and by further organic or inorganic components with higher density (e.g., fillers) in the casing. In addition, these components have an elastomeric, rubber-like property profile, which increases the puncture resistance of the casing and reduces the tear propagation through the casing of the invention, especially when being present in the optional at least one non-skin layer comprising at least one thermoplastic component with a density of below 0,915 g/cm³ in a quantity high enough to form the matrix of the layer or even form the entire layer.

The layer thickness of the optional at least one non-skin layer, which comprises at least one thermoplastic component with a density of less than 0,915 g/cm³, can be in a range of from 1 to 20 µm, preferably 2 to 15 µm, more preferably 3 to 10 µm, if said at least one layer is not the same at least one layer comprising the at least one thermoplastic component with a density of more than 1,00 g/cm³. Else, the layer thickness of the at least one layer comprising the at least one thermoplastic component with a density of more than 1,00 g/cm³ prevail.

Alternatively, the casing according to the invention can comprise optionally at least one non-skin layer, which has a layer density of below 0,915 g/cm³. This can be achieved by letting said layer have such a high content of at least one thermoplastic component with a density of below 0,915 g/cm³ that the at least one layer has a layer density of below 0,915 g/cm³ or by having said at least one layer comprise porosity. The ways of creating the porosity in a non-skin layer are described in detail below for porous skin and non-skin layers. However, the restrictions regarding the possible materials, which must comprise an essentially PO-based composition, are not present here, because even a composition with a non-porous density of more than 0,915 g/cm³ can have a layer density of below 0,915 g/cm³ if sufficient porosity is present in said layer. Specifically, the porous non-skin layer may comprise components with a density of 0,915 g/cm³ or more, even with a density of more than 1,00 g/cm³.

If the optional at least one non-skin layer which has a layer density of below 0,915 g/cm³ is porous, then the layer thickness described above increases by the "empty" thickness of the created porosity, where such a porosity can represent 10 to 90 vol%, preferably 20 to 80 vol%, more preferably 30 to 70 vol%.

### Optional adhesive layer

In some cases, the layers of the casing according to the invention do not adhere sufficiently to each other when they are coextruded without any adhesive layer in between or without any layer having a high enough content of at least one adhesion promoter or without both. Good adhesion may be achieved, for example, if at least one intermediate adhesive layer is generated between neighbouring layers of at least one other type. Such an adhesive layer providing suitable adhesion properties may predominantly contain grafted copolymers, linear copolymers or both types of copolymers. These copolymers may comprise more than one or even more than two different monomer types, for example ethylene units, propylene units, (meth)acrylic acid units, (meth)acrylic acid ester units, vinyl acetate units, maleic anhydride units or any combination of these. More preferred are maleic anhydride grafted PEs (LDPEg-MAAA, HDPE-g-MAA, LLDPE-g-MAA and the like), ethylene-acrylic acid ester copolymers, ethylene-vinyl acetate copolymers (EVA) or any combination of these.

All these polymeric substances may be present alone or in combination in anyone of the adhesive layers. Furthermore, the adhesive layer may additionally contain any further organic polymers like PE, PP, any pigments, any other additives or any combination of these. Therefore, the compositions for the manufacture of an adhesive layer as well as the composition of the formed adhesive layer may consist essentially of the above-mentioned substances if desired. The compositions and other properties of more than one adhesive layer when more than one adhesive layer is present in one casing according to the invention are independent one from the other, although they may be partially or totally identical. The intermediate adhesive layer(s) may be omitted if there is a high enough adhesion between neighbouring layers as it often occurs for example between PA layers and some types of EVOH layers or if any adhesive promoter is admixed into the composition of the adjacent layers.

Typically, the adhesive layer contains at least 50% by weight of at least one substance that has adhesive properties. Often, its content is at least 60% by weight, more preferred at least 70% or 80% by weight, sometimes at least 90% by weight, in most cases even up to 100% by weight. By the adequate selection and use of at least one adhesion promoter for the adhesive layer, an excellent adhesion between the adjacent layers is generated. Thereby, adhesion of parts of the casing or parts at least of the inner layer to the food can be minimized or prevented. A perfect selection is achieved, when during peeling the casing off the sausage a separation of layers, i.e., a delamination of the casing structure is not observed.

As the adhesive promoter typically has polyolefinic properties, the optional adhesive layer contributes to the water vapour barrier of the casing. It also contributes to the compatibilization of the non-polyolefinic components with the PO components in a compounding step. Therefore, it is preferred that the layer thickness of all optional adhesive layers present in the casing of the invention is at least 20%, preferably at least 40%, more preferably at least 60% of the layer thickness of all the at least one non-skin layer, which comprises at least one thermoplastic component with a density of more than 1,00 g/cm³.

### Optional porous layer

According to the invention, the casing optionally comprises at least one porous layer. Said porous layer can be a non-skin layer, where the porous layer contributes to visual effects or to a density reduction if the porosity is not in an open cell contact with a porous skin layer, and/or a skin layer, where an inner skin layer has the task to absorb e.g., transferable functional additives, which are transferred to the contained foodstuff, or where an outer skin layer creates visual or tangible alternatives to a non-porous surface.

The at least one transferable functional additive may be, e.g., one or more of colorants such as caramel or paprika extract, flavourings such as glutamates, fragrances such as terpenoids and/or any other desired food additives. Many transferable functional additives can be effective as different (such as two or three) types of transferable functional additives selected from the group of colorants, flavourings and fragrances. E.g., liquid smoke functions as a colorant, a flavouring as well as a fragrance.

Typically, at least one porous absorbing skin layer is designed to absorb/adsorb and therefore to immobilize at least one transferable functional additive. The additive can be in liquid form and after it is immobilized, it can be desorbed, mobilized and transferred to food it is in contact with. A dominating mechanism can be adhering or bonding of the additive to the surface, with only some absorption into the porous absorbing layer. The immobilization of the at least one transferable functional additive can be enhanced via drying and/or curing.

In one embodiment the food casing according to the present invention comprises at least one porous layer serving as an absorbing inner skin layer. Alternatively, one, two, three or four or more porous non-skin layers adjacent to said inner skin layer may form together with said inner skin layer a group of porous inner layers, of which one is the innermost porous layer whose surface is adjacent to the encased foodstuff.

In another embodiment the food casing according to the present invention comprises one porous absorbing skin layer serving as an absorbing outer skin layer, when it is extruded. If such a preparation process is used, the casing needs to be reversed at some point in the process to prepare a multi-layered coextruded thermoplastic food casing according to the present invention which can be subjected to a food stuffing step.

The optional porous skin or non-skin layers of the casing according to the invention comprise as a predominant component at least one thermoplastic polymer material selected from the group of POs, preferably PEs, PPs or copolymers based on, e.g., ethylene, propylene, or other -olefins, poly(iso)butene, modified polyolefins with a function as adhesion promoters or any mixture thereof.

In one preferred embodiment of the present invention POs can be used as thermoplastic organic polymers, such as homopolymers of ethylene or propylene and/or copolymers of linear alpha-olefins with 2 to 8 C-atoms, preferably LLDPE, LDPE, HDPE, homo-PP, block-PP and random copolymers of propylene. In an even more preferred embodiment LDPE and LLDPE can be used.

The optional porous skin or non-skin layer may further comprise the following components: PA, vinyl copolymers like ethylene vinyl acetate copolymers, PVOH, EVOH, which optionally is partially or totally saponified, polyvinylpyrrolidone, or any combination thereof. However, in the case of porous skin layers, their addition is not preferred, as this may reduce the NIR-sortability of the casing in the recycling process if the PO matrix cannot cover sufficiently the non-PO components.

Furthermore, the thermoplastic organic polymer(s) usable in an optional porous absorbing skin layer may comprise hydrophilic components such as a polyetherester copolymer, PVOH, polyesterblockamide, copolyetheresteramide or block copolymer polyether amide, or polyvinylpyrrolidone to facilitate the water vapour transmission through or into the matrix of the at least one thermoplastic porous absorbing layer, thus helping to immobilize the functional additive after coating. Also in this case, the addition of hydrophilic components is not preferred, as this may reduce the NIR-sortability of the casing in the recycling process, but it may be necessary for the immobilization of the functional additive.

According to the present invention said optional at least one porous skin or non-skin layer comprises as a predominant component at least one (co)PO, which is present in said layer in a weight ratio of at least 55 weight-%, preferably at least 70 weight-%, more preferably at least 80 weight-%, even more preferably at least 90 weight-%, most preferably 90 to 95 weight-% based on the weight of the thermoplastic polymer material used for forming said optional at least one porous layer (not including other additives such as pore-forming agents, fillers or functional additives).

The optional at least one porous layer usually has - in total - an average layer thickness of 10 to 200 µm, preferably 15 to 150 µm, more preferably 15 to 130 µm, more preferably 20 to 120 µm. The layer thickness depends on the desired density reduction (if a non-skin porous layer) or on the desired absorption capacity (if an absorbing porous layer), and the number of layers available to achieve the desired density reduction or absorption capacity.

According to a preferred embodiment of the present invention the porous structure of the optional at least one porous layer is created by a supercritical pore-forming agent introduced into the molten polymer or polymer mixture in the extruder designated to form the at least one thermoplastic porous absorbing layer in such a way that a solution is being generated. One benefit of using a supercritical pore-forming agent like supercritical nitrogen, supercritical oxygen, supercritical helium or supercritical carbon dioxide, more preferably supercritical carbon dioxide or supercritical nitrogen, even more preferably supercritical nitrogen is that no pore-forming agent will remain in the at least one porous inner layer after extrusion of the polymer mixture.

The concentration of the supercritical pore-forming agent in the polymer mixture forming the optional at least one porous layer is usually in a range of from 0,001 to 10 weight-%, preferably in the range from 0,005 to 1 weight-%, most preferably in the range from 0,01 to 0,5 weight-% based on the weight of the polymer mixture forming said at least one thermoplastic porous absorbing layer.

In addition, optionally the optional at least one porous layer may comprise a filler. Preferably, said filler is an inorganic filler. In a preferred embodiment said filler - if used - is selected from silica(s) such as quartz, fused quartz, cristobalite, diatomaceous earth, silica sol, silica gel, precipitated or pyrogenic silica or any combination of these silica types, talc, calcium carbonate(s), barium sulphate, alumina(s), aluminium hydroxide(s), magnesium hydroxide, titania, zirconia, silicate(s) preferably precipitated Ca-, Al-, CaAl-, NaAI-silicates, as mica(s), kaolin, wollastonite or any combination of these silicates, NaCl or any combination between substances of these different substance groups. Such fillers are preferably added in a fine particulate form, although other forms like gel etc. can be used if desired.

Typically, the filler is added in an amount of from 0,1 to 19 weight-%, preferably from 0,1 to 15 weight-%, most preferably from 0,2 to 12 weight-%, based on the weight of the polymeric material used to form the optional at least one thermoplastic porous layer.

Furthermore, optionally the at least one optional porous layer may comprise a nucleating agent. According to the present invention the nucleating agent may be selected from the group consisting of carbonates (e.g., sodium bicarbonate), hydrazine derivatives (e.g., 4,4'-oxibis (benzenesulfonylhydrazide)), azo compounds (e.g., azodicarbonamide), semicarbazides, tetrazoles, nitroso compounds and/or citric acid and derivatives thereof. If at least one of the at least one porous absorbing layers contains PP, the nucleating agent can be a β-nucleating agent.

According to another preferred embodiment the porous structure of the optional at least one porous layer is formed by using non-supercritical liquid pore-forming agents such as hydrophobic oils or oily substances, alternatively and/or in addition. In the multi-layered (co)extruded thermoplastic food casing according to the present invention (i.e., after its production) the optional at least one porous layer of the food casing may comprise liquid pore-forming agents selected from the group consisting of the following pore-forming agents:
1. mineral oils
2. vegetable oils such as peanut oil, soybean oil, sunflower oil, rape oil, olive oil or any combination thereof,
3. esters of natural fatty acids,
4. synthetic fatty acid esters of glycerine, such as glycerine monolaurate, glycerine monooleate, glycerine dioleate, glycerine trioleate or any combination thereof,
5. mono- or diglycerides of fatty acids, which optionally have been reacted to esters with any organic acid, e.g., like acetic acid, lactic acid, citric acid or biacetyl tartaric acid or any combination thereof or any combination of substances within the different chemical groups,
6. polyglycerol esters of fatty acids,
7. alkyl polyglucosides,
8. esters of saccharose,
9. sugar glycerides,
10. sorbitan fatty acid esters such as sorbitan monostearate, sorbitan tristearate, sorbitan monolaurate, sorbitan monooleate, sorbitan monopalmitate or any combination thereof,
11. polyoxyethylene-sorbitan fatty acid esters such as Polysorbat^{®} 20 (polyoxyethylene-(20)-sorbitan monolaurate), such as Polysorbat^{®} 40 (polyoxyethylene-(20)-sorbitan monopalmitate), such as Polysorbat^{®} 60 (polyoxyethylene-(20)-sorbitan monostearate), such as Polysorbat^{®} 65 (polyoxyethylene-(20)-sorbitan tristearate) or like Polysorbat^{®} 80 (polyoxyethylene-(20)-sorbitan monooleate),
12. C12- to C18-fatty alcohol ethoxylates,
13. Pore-forming liquids based on glycerine or lecithin such as viscous oil-like, but more polar liquids for example compounds based on glycerine, lecithin, or any combination thereof, and
14. glycolic compounds such as polyethylene glycol, propylene glycol ester especially of natural fatty acids like oleic acid, lauric acid, stearic acid, palmitic acid, or any combination thereof.

Usually, the optional at least one porous layer contains a locally varying porosity in the range of from 0 to 90% by volume, depending on the desired density reduction, absorbing capacity and/or visual or tangible effect.

The pore diameters of the pores and porosity channels in the optional at least one porous layer may preferably be in the range from 0,01 to 2000 µm, often in the range from 0,05 to 1200 µm. Preferably, the pore channels predominantly have diameters in the range from 0,02 to 1000 µm, more preferred in the range from 0,1 to 800 µm, as calculated via the numbers of well visible pores and their smallest diameter in the plane of the surface under a scanning electron microscope (SEM) or on SEM photographs of suitable magnification. Often, the pore size distribution of the pores of the optional at least one porous layer shows a pore size distribution that has two, three or four peaks. The average diameter d50 of the pore diameter distribution may preferably be in the range from 0,1 to 500 µm, more preferred in the range from 0,5 to 400 µm or from 1 to 300 µm, most preferred in the range from 1.5 to 200 µm or from 2 to 150 µm. In many embodiments, the d95 data of the pore diameter distribution may preferably be in the range from 10 to 3500 µm, more preferred in the range from 20 to 3000 µm or from 30 to 2400 µm, most preferred in the range from 40 to 1800 µm or from 50 to 1400 µm or from 60 to 1000 µm.

The porosity of the optional at least one porous layer of the food casing according to the present invention may be measured on cross-sections of casings or films prepared with a cryo-microtome. The measurements of the (total) porosity may be performed under a scanning electron microscope (SEM) or on SEM photographs, e.g., with the aid of measurement lines counting the number of points or measurement lengths for the porosity in relation to the total number of points respectively length of the total measurement length. According to the present invention the porosity is the sum of the interconnected porosity (pore channels etc.) and of the closed porosity (closed pores). The ratio of the interconnected porosity to the closed porosity may vary in broad ranges.

In case the casing's circumference, the speed of the extrusion line, the rotations per minute of the respective layer's melt pump, its size, the density of the composition at room temperature and the thermal density correction as a ratio of density at room temperature over density at the mass temperature in the melt pumps, as calculated from the ratio of Melt Flow Rate (MFR) over Melt Volume Rate (MVR) of the composition in the respective extruder, are known, the porosity of the optional at least one porous layer can also be determined by determining the thickness of the porous layer with a light or SEM microscope and determining the non-porous volume of said layer casing which was extruded. The non-porous volume is calculated by dividing the melt volume per minute by the thermal density correction. The porous volume of the extruded layer per minute is calculated from the speed of the extrusion line, the casing circumference and the respective layer thickness. The porosity in the layer in percent is 1 minus the material content coming from the ratio of non-porous volume over porous volume.

The optional at least one porous skin layer is preferably able to absorb/adsorb the at least one transferable functional additive such as liquid smoke within a contact time, e.g., of up to 15 to 25 s at 20 °C and at atmospheric pressure when assuming a layer thickness of the at least one thermoplastic porous absorbing layer as being in the range from 10 to 200 µm, in an amount of preferably in the range from 1 to 100 g/m² , more preferably in the range from 5 to 90 g/m² or from 10 to 80 g/m², most preferred in the range from 15 to 70 g/m² especially of liquid smoke of the product "Hickory Teepak Alkalized Smoke" by Kerry Ingredients & Flavours or of the product "SmokEz Cherrywood Poly2515" by Red Arrow. With these liquid smokes, coating weights of functional additive of more than 0,3 g/m² per µm porous absorbing layer thickness, more preferably more than 0,4 g/m² per µm porous absorbing layer thickness, most preferably more than 0,5 g/m² per µm porous absorbing layer thickness can be obtained. Depending on the composition of the optional at least one porous skin layer and of the functional additive, the absorption of a functional additive into the at least one thermoplastic porous absorbing layer may take longer than 15 to 25 s, e.g., several minutes, hours or even days.

The compositions and other properties of porous non-skin layers in direct contact to the optional porous skin layer within one casing may differ between an innermost absorbing layer and one or more other absorbing layer(s), although they may be partially or totally identical if desired.

In a preferred embodiment as the thermoplastic organic polymers of an absorbing layer comprising PA and polyolefinic components or of an additional absorbing layer between the innermost absorbing layer and an adjacent barrier layer there may be used copolymers of ethylene or propylene, more preferably linear alpha-olefins with 3 to 8 C-atoms with alpha-beta-unsaturated carboxylic acids, more preferably acrylic acid, methacrylic acid and/or their metal salts and/or their alkylester or corresponding graft-copolymers of the above-mentioned monomers onto POs or partially saponified ethylene/vinylacetate-copolymers, which are optionally graft-polymerised with an alpha-beta-unsaturated carboxylic acid and have a low degree of saponification, or their blends. Furthermore, modified POs such as modified homo- or copolymers of ethylene and/or propylene and optionally further alpha-olefins with 3 to 8 C-atoms, which contain grafted monomers such as alpha-beta-unsaturated dicarboxylic acids, preferably maleic acid, fumaric acid, itaconic acid or their acidic anhydrides, acid esters, acid amides or acid imides can be used according to the present invention. Most preferred are POs which contain grafted maleic anhydride, because grafted maleic anhydride groups provide an adhesive function so that blends of PA and PO components are compatibilized or delamination of, e.g., PA-based and PO-based layers can be avoided.

### Layers and the order in which they are arranged if desired

According to the invention the layers of the casing are arranged in such a way that the two skin-layers, of which optionally one or both may be porous, are predominantly based on the same PO type, at least one non-skin layer comprises at least one thermoplastic component with a density of more than 1,00 g/cm, and optionally at least one non-skin layer comprises at least one thermoplastic component with a density of below 0,915 g/cm³ or having at least one layer density of below 0,915 g/cm³ resulting from comprising at least one thermoplastic component with a density of below 0,915 g/cm³ and/or being a porous layer. The combination of all layers is designed in such a way that the combination leads to a higher than 50% by weight PO content in the casing of the invention and an overall density of the casing of the invention of below 1,00 g/cm³. Preferably, according to the invention, the density increase caused by any components with a density of more than 1,00 g/cm³ is compensated by optional layers comprising porosity and/or components with a density of less than 1,00 g/cm³.

If any layer except for an optional adhesive layer should contain at least one adhesion promoter (i.e., a substance having adhesive properties), the content of the at least one adhesion promoter in this layer is preferably up to 50% by weight, more preferred up to 40% by weight, often up to 30 or 20% by weight, sometimes up to 10% by weight. Suitable adhesion promoters include preferably organic polymeric materials of adhesive behaviour.

The casings according to the invention can further contain additional processing aids like anti-blocking agents, slip agents, stabilizers and/or anti-statics. Their content in the composition is usually in a range of 0,01 to 5 weight-%, based on the total weight of the casing.

In one preferred embodiment the at least one non-skin layer comprises at least one thermoplastic component with a density of more than 1,00 g/cm³ has a barrier effect for oxygen and perhaps even additionally for some other gases, so that the enclosed food may be preserved for a longer time.

The coextruded thermoplastic food casing according to this invention can be a flat film, which is sealed to a tube latest at the point of stuffing, a sealed flat film or a seamless tubular casing.

According to the present invention the food casing of the present invention may consist of at least 3 layers (2 skin layers and one non-skin layer) but can comprise any number of layers from 3 to 10, 11, 12 or more than 12 layers. Many different multilayer structures are possible. More preferred, a casing according to the invention comprises two, three, four, five or seven layers, even more preferred five or seven layers as shown below. The following abbreviations in the denomination of the layertypes are used:
- SL: Skin Layer
- pSL: porous Skin Layer
- NSL: Non-Skin Layer
- pNSL: porous Non-Skin Layer

Where necessary, the following abbreviations are used to describe material-subtypes:
- A: optional adhesive material
- B: material based on the same PO type
- C: material comprising at least one thermoplastic component with a density of more than 1,00 g/cm³
- D: optional material comprising at least one thermoplastic component with a density of less than 0,915 g/cm³
- E: optional material composition having a layer density of less than 0,915 g/cm³

The letters can be followed by numbers defining layers of the same material-(sub)type, whose composition may be different, but it can also be the same composition for two or more layers of the same material-(sub)type.

The general structure of the casing according to the invention is from food contact side to outside:
SL/.../NSL/.../SL

The structure can be extruded as a tubular casing with optional porous skin layers on the inside and/or on the outside. If there is an outer porous skin layer, which is to absorb functional additives for transfer to the foodstuff, the casing must be inverted by known technologies at some point in the process before or latest while being stuffed with the foodstuff.

The (porous) non-skin layer (p)NSL can have adhesive properties (subtype A), material based on the same PO type as the skin layers (subtypes A, B, C, D), comprise material with at least one thermoplastic component with a density of more than 1,00 g/cm³ (subtype C), optionally comprise at least one thermoplastic component with a density of less than 0,915 g/cm³ (subtype D), and/or optionally comprise a material composition having a layer density of less than 0,915 g/cm³ (subtype E). An allocation to subtype A does not exclude a content of subtype B, C and/or D and vice versa. The allocation of a (porous) non-skin layer (p)NSL to the subtype C does not exclude that the layer may in addition comprise subtype A, B, D or E. Although in the following structures the (porous) skin layers (p)SL will have the predominant subtype B allocated to them, they may comprise the subtypes A, C, D and E, also in different compositions.

Consistently, preferred structures from inside to outside are as follows, but they are not limited to those listed:

| | |
|---|---|
| 3 layers: | SL-B / NSL-C / SL-B (see figure 1) |
| | SL-B / pNSL-C / SL-B |
| | pSL-B / NSL-C / SL-B |
| | pSL-B / NSL-C / pSL-B |
| 4 layers: | SL-B / NSL-A / NSL-C / SL-B |
| | SL-B / NSL-D / NSL-C / SL-B |
| | SL-B / NSL-C / NSL-D / SL-B (see figure 2) |
| | SL-B / NSL-C / pNSL-D / SL-B |
| | SL-B / NSL-C / pNSL-E / SL-B |
| | pSL-B / NSL-A / NSL-C / SL-B |
| | pSL-B / NSL-D / NSL-C / SL-B |
| | pSL-B / NSL-C / NSL-D / SL-B (see figure 4) |
| | pSL-B / NSL-C / pNSL-D / SL-B |
| | pSL-B / NSL-C / pNSL-E / SL-B |
| 5 layers: | SL-B / NSL-A / NSL-C / NSL-A / SL-B |
| | SL-B / NSL-A / NSL-C / NSL-D / SL-B |
| | SL-B / NSL-C / NSL-D / NSL-B / SL-B |
| | SL-B / NSL-C / pNSL-A / NSL-B / SL-B (see figure 3) |
| | SL-B / NSL-A / NSL-C / pNSL-A / SL-B |
| | SL-B / NSL-A / NSL-C / NSL-A / pSL-B |
| | pSL-B / NSL-A / NSL-C / NSL-A / SL-B |
| | pSL-B / NSL-A / NSL-C / pNSL-A / SL-B |
| 6 layers: | SL-B / NSL-A / NSL-C / NSL-A / pNSL-B / SL-B |
| | SL-B / NSL-B / NSL-A / NSL-C / NSL-A / SL-B |
| | SL-B / NSL-B / NSL-A / NSL-C / NSL-D / SL-B |
| | SL-B1 / NSL-A1 / NSL-C / pNSL-A2 / NSL-B2 / pSL-B1 |
| | pSL-B / NSL-A / NSL-C / NSL-A / pNSL-B / SL-B |
| | pSL-B / pNSL-B / NSL-A / NSL-C / pNSL-A / SL-B |
| 7 layers: | SL-B / NSL-A / NSL-C / NSL-A / pNSL-B / NSL-A / SL-B |
| | pSL-B / NSL-A / NSL-C2 / NSL-A / NSL-C1 / NSL-A / SL-B |
| | pSL-B / pNSL-B / NSL-A / NSL-C / NSL-A / pNSL-B / SL-B |
| | SL-B / NSL-A / NSL-C / NSL-A / pNSL-B / NSL-A / SL-B |
| | SL-B / NSL-A / NSL-C / NSL-A / pNSL-B / NSL-A / pSL-B |
| | SL-B / NSL-A / pNSL-B / NSL-A / NSL-C / NSL-A / SL-B |
| | SL-B / NSL-A / pNSL-B / NSL-A / NSL-C / NSL-A / pSL-B |
| 8 layers: | SL-B / NSL-B / NSL-A / NSL-C / NSL-A / NSL-D / NSL-A / SL-B |
| | SL-B / NSL-B / NSL-A / NSL-C / NSL-A / pNSL-B / NSL-A / SL-B |
| | pSL-B / NSL-B / NSL-A / NSL-C / NSL-A / NSL-E / NSL-A / SL-B |
| | pSL-B / pNSL-B / NSL-B / NSL-A / NSL-C / NSL-A / pNSL-B / SL-B |
| 9 layers: | SL-B / NSL-B / NSL-A / NSL-C / NSL-A / pNSL-B / NSL-A / NSL-B / SL-B |
| | SL-B / NSL-B / NSL-A / NSL-C / NSL-A / NSL-E / NSL-A / NSL-B / pSL-B |
| | pSL-B / pNSL-B / NSL-B / NSL-A / NSL-C / NSL-A / pNSL-E / NSL-B / SL-B |

Obviously, with the number of layers, the number of possible combinations increases, and thus the listed structures can only give a small selection of possible structures.

In a more preferred embodiment, the following structures are preferred:
5 layers: Skin layer of same PO type / adhesive non-skin layer / non-skin layer with component of density larger than 1,00 g/cm³ / adhesive non-skin layer/ skin layer of same PO type,
Porous skin layer of same PO type / adhesive non-skin layer / non-skin layer with component of density larger than 1,00 g/cm³ / adhesive non-skin layer / skin layer of same PO type,
Skin layer of same PO type / adhesive non-skin layer / non-skin layer with component of density larger than 1,00 g/cm³ / adhesive non-skin layer with component or layer density of smaller than 0,915 g/cm³ / skin layer of same PO type,
Porous skin layer of same PO type / adhesive non-skin layer / non-skin layer with component of density larger than 1,00 g/cm³/ adhesive non-skin layer with component or layer density of smaller than 0,915 g/cm³ / skin layer of same PO type, such as
   SL-B / NSL-A / NSL-C / NSL-A / SL-B
   pSL-B / NSL-A / NSL-C / NSL-A / SL-B
   SL-B / NSL-A / NSL-C / NSL-D / SL-B
   pSL-B / NSL-A / NSL-C / NSL-D / SL-B
   SL-B / NSL-A / NSL-C / NSL-E / SL-B
   pSL-B / NSL-A / NSL-C / NSL-E / SL-B
   SL-B / NSL-A / NSL-C / pNSL-A / SL-B
   pSL-B / NSL-A / NSL-C / pNSL-A / SL-B
      and
7 layers: Skin layer of same PO type / adhesive non-skin layer / non-skin layer with component of density larger than 1,00 g/cm³ / adhesive non-skin layer / non-skin layer with component or layer density of smaller than 0,915 g/cm³ / adhesive non-skin layer / skin layer of same PO type,
Porous skin layer of same PO type / adhesive non-skin layer / non-skin layer with component of density larger than 1,00 g/cm³/ adhesive non-skin layer / non-skin layer with component or layer density of smaller than 0,915 g/cm³ / adhesive non-skin layer / skin layer of same PO type, such as
   SL-B / NSL-A / NSL-C / NSL-A / NSL-D / NSL-A / SL-B
   pSL-B / NSL-A / NSL-C / NSL-A / NSL-D / NSL-A / SL-B
   SL-B / NSL-A / NSL-C / NSL-A / NSL-E / NSL-A / SL-B
   pSL-B / NSL-A / NSL-C / NSL-A / NSL-E / NSL-A / SL-B
   SL-B / NSL-A / NSL-C / NSL-A / pNSL-B / NSL-A / SL-B
   pSL-B / NSL-A / NSL-C / NSL-A / pNSL-B / NSL-A / SL-B
   SL-B / NSL-A / NSL-C1 / NSL-C2 / NSL-A / pNSL-B / SL-B
   SL-B / NSL-A / NSL-C / NSL-A / pNSL-B / NSL-A / pSL-B

Although possible, it is not preferred to make the non-skin layer comprising at least one component of density higher than 1,00 g/cm³ a porous layer, as this layer is also responsible for the oxygen barrier of the casing. Instead, it is preferred to make PO-based layers porous. In case the number of layers is limited, this may mean that the porous layer may have adhesive properties because the neighbouring layer is a non-skin layer comprising at least one component of density larger than 1,00 g/cm³.

According to the invention, if the casing has a porous non-skin layer, which does not comprise at least one thermoplastic component with a density of more than 1,00 g/cm³, then it is preferred to place said porous layer between the outer skin layer and the outermost non-skin layer, comprising at least one thermoplastic component with a density of more than 1,00 g/cm³. It was found that in the orientation step the porous layer was noticeably thicker (i.e., more porous) when stretched against ambient pressure than when stretched under restriction of at least one layer comprising at least one thermoplastic component with a density of more than 1,00 g/cm³.

If the casing of the invention shall be a coloured casing, then it is preferred to position the coloured non-porous layer between the outer surface of the casing and a porous non-skin layer, having pores of such small dimension that the light is refracted by the porosity. In this case the porous layer appears white without the addition of a white pigment or any other pigment or filler, greatly increasing the opacity of the casing by the porous layer, thus preventing that the colour of the foodstuff influences the seen-from-the-outside colour tone of the coloured non-porous layer.

If the casing of the invention has a - optionally coloured - porous layer with pores of such large dimension that - from the outside of the casing - the foodstuff or a coloured and/or porous layer in between foodstuff and said outer - optionally coloured - porous layer is visible, 2-colour effects or even an optical 3D-effect (i.e., porosity over a colour-background) become possible.

Optionally one or both skin layers can be porous. On both surfaces the reason for extruding porous skin layers can be the absorption of a functional additive or the creation of a tangible roughness.

A food casing according to the invention may be used as a packaging for any type of food including but not limited to meat products, sausage products, milk products, cheese products and dishes, unprocessed or processed - especially to meat containing products like fermented sausages, cooked-meat sausage (Kochwurst), scalded emulsion sausage (Brühwurst) like frankfurters, cooked ham (Kochschinken), ham, pickled meat, smoked turkey breast and salt meat (Pökelware), vegetables, dairy products like cheese, carbohydrates, soybean products as well as different mixtures or in any desired application. The food casings according to the present invention may be used in any desired form such as in the form of "endless" tubes, optionally resulting from longitudinally sealed flat film instead of seamless tubes, sections, rings such as sausage rings, customized products such as shirred sticks or sealed bags, and the food casing according to the present invention can be empty, stuffed and further processed if desired.

Food is often processed, i.e., cooked in a plastic film package, for example by at least partially immersing the package in hot water or placing the package in a steam cabinet. The processed food package may then be refrigerated until the processed food is prepared for a meal or is to be consumed, or it is peeled and further packaged after portioning into pieces or slices. During the cooking process, e.g., of meat, for example, smoke or other modifiers for colour, flavour or fragrance diffuse into the food material. The diffusion process takes longer if taking place at ambient temperatures only, e.g., during a fermenting process or storage.

The casings of the invention are being stuffed with the foodstuff, clipped, and cooked like conventional plastic casings. A multi-layered (co)extruded thermoplastic food casing according to the present invention can generate a wrinkle-free sausage without the need for crosslinking the casing and without the need for pre-soaking the casing. In contrast to many conventional casings with PA-based skin-layers of the same wall thickness, soaking is not needed to sufficiently overstuff the casing for wrinkle-free sausages after cooking and cooling.

As, according to the present invention, the multi-layered bi-axially oriented food casing is a thermoplastic food casing, disadvantages due to lamination with organic substances can be avoided and, thus, mould growth risks due to organic substances such as paper, cellulose or starch can be avoided. In the preferred embodiment of a multi-layered thermoplastic food casing without a longitudinal seam, the casing of the invention does not comprise any weakening seam or seal.

The PO content of the food casing according to the present invention ensures a sufficient water vapour barrier effect so that to-be-transferred functional additives in a porous inner skin layer do not readily diffuse to the outside of the casing, preventing contamination of the environment and machinery during handling and processing. Furthermore, by using a food casing as defined according to the present invention, weight loss during cooking and storage can be greatly decreased in comparison to conventional casings made of fibrous, cellulose or collagen.

Also, an oxygen barrier effect can be adjusted to the needs of the application by adjusting the composition of the non-skin layers, adding, e.g., polyvinylidenchloride or EVOH, blends of PA and EVOH or PA resins produced through polycondensation of meta-xylylene diamine (MXDA) with adipic acid (e.g., Nylon-MXD6^{®} from Mitsubishi Gas Chemical Company).

In the recycling process, the casing of the invention is NIR-detectable as PO-film from inside and outside, as both skin-layers are made from PO, in contrast to casings with PA-based skin layers with the same content of PO. As both skin layers are of the same type of PO, the casing of the invention is better NIR-sortable towards a PO type specific recycling path than other prior art, which is based on skin layers made from different POs, e.g., outside PP and inside PE.

In addition, it was found that, as the adhesion to the foodstuff can be precisely adjusted to the application by means of the intensity of the corona treatment, the casing is peelable without tearing off foodstuff from the sausage log, leaving a clean casing surface. Foodstuff which is torn off and then remains adhering to the film, endangers the correct identification and sorting of the casing by NIR-sensors. Thus, in contrast to casings with PA-based skin layers, the casing of the invention is sortable into an existing recycling path.

In the recycling step, which separates the waste according to density, e.g., by floatation on water, conventional casings with PA-based skin layers do not float because the high PA content results in a density larger than 1,00 g/cm³. In contrast, the casing of the invention floats on water because the overall density of the casing can be adjusted to the density of the targeted PO by incorporating VLDPE or ULDPE and/or porous layer(s) into the structure. Surprisingly, the incorporation of VLDPE, ULDPE or porous layer(s) is possible, without an application-relevant reduction of the stiffness of the casing, which would lead to wrinkles after cooking and cooling.

When compounding the recyclate, the casing of the invention is re-meltable. In contrast to prior art, which crosslinks at least one of the PO-layers to increase thermal stability, the matrix of the casing according to the invention is made of non-crosslinked thermoplastic polymers and is therefore fully re-meltable.

### METHOD OF PRODUCING THE CASINGS

The present invention further provides a method for producing a multi-layered coextruded bi-axially oriented thermoplastic food casing as defined above. The method comprises:
a) co-extruding the composition of the different layers forming thermoplastic food casing through an annular die,
b) rapid quenching of melt to obtain a multilayered tube,
c) reheating the casing and biaxially orienting it by an air bubble between two pair of reels of different speed, and
d) annealing the casing.

After the annealing step the casing can be wound onto cores. As will be described below in detail, the orientation ratios and the annealing ratios in machine direction and transversal direction are selected in such a way that the ratio of stiffness in transversal direction to stiffness in machine direction is higher than 1.

The food casing of the invention has a higher than 50% by weight PO content, an overall density of below 1,00 g/cm³, and a ratio of stiffness in transversal direction to stiffness in machine direction of larger than 1, and comprises two skin-layers, which are predominantly based on the same PO type, at least one non-skin layer, which comprises at least one thermoplastic component with a density of more than 1,00 g/cm³, optionally at least one non-skin layer comprising at least one thermoplastic component with a density of below 0,915 g/cm³ or having at least one layer density of below 0,915 g/cm³, resulting from comprising at least one thermoplastic component with a density of below 0,915 g/cm³ and/or from being a porous layer.

In this sense, the method comprises a step a) of subjecting at least three thermoplastic polymer compositions for the two skin layers and the at least one non-skin layer comprising at least one thermoplastic component with a density of more than 1,00 g/cm³ to a coextrusion process to generate at least three different layers that will be united at high temperature to form a multi-layered thermoplastic food casing.

In their respective extruders the thermoplastic compositions are molten and supplied according to the desired ratio of the layer thicknesses to a connected heated annular multilayer die having at least as many ring-like channels as needed for the different heated compositions. When leaving the die in step b) the extruded food casing solidifies on cooling to a so-called primary tube comprising at least three layers well adhering to each other.

In step c) the primary tube is preheated to orientation temperature and then biaxially stretched. To produce the biaxially oriented casing of the invention, commonly known coextrusion technologies like double or triple bubble extrusion lines can be used. In a preferred embodiment, the tube is pre-heated by IR-heating. In comparison to a non-oriented blown film, the biaxial orientation increases the stiffness and the barrier properties of the material, thus making better use of the raw material, as the same stiffness and barrier can be reached with less thickness, i.e., less raw material. The stretching results in a high orientation of the multi-layered thermoplastic film. If at least one of the layers can create porosity, during this stretching step the number and/or the volume of pores may increase.

The optional porous layers can be generated by known methods such as coextruding a polymer composition comprising, e.g., a material blend, which performs phase separation when elongated, a β-nucleated PP and/or a supercritical, a physical and/or a chemical pore-forming agent. In case that a porous layer is created by means of a supercritical foaming agent, the corresponding extruder of the extrusion line needs to be equipped with a suitable dosing device for the foaming agent.

Any of a wide variety of supercritical fluid pore-forming agents such as supercritical nitrogen, supercritical oxygen, supercritical helium or supercritical carbon dioxide, more preferably supercritical carbon dioxide or supercritical nitrogen, even more preferably supercritical nitrogen may be used as the supercritical pore-forming agent to be used according to the present invention. Said supercritical pore-forming agent is introduced into the extruder and made to form rapidly a single-phase solution with the polymeric material by injecting said pore-forming agent as a supercritical fluid.

Usually, the supercritical pore-forming agent is introduced into polymeric material which will form the porous inner or outer layer(s), via a port of an extruder in an amount of 0,001 to 10 weight-%, based on the weight of the polymer mixture forming said inner or outer porous layer(s).

Optionally, as outlined above, the composition forming the optional at least one porous skin layer may additionally comprise a filler as defined above.

During the coextrusion and during the stretching, the plastic material of the casing is oriented, and the casing gains shrinkability. Then the stretched multi-layered film may pass through a further heating zone to generate a heat-setting, wherein the casing is usually stabilized by an entrapped air-bubble. In such a way, the potential of thermal shrinkage may be reduced to low values as needed for practical application as food casing that is typically in the range from 5% to 20% in longitudinal respectively in transversal direction, as measured after 1 minute in water of 80°C.

The casing of the invention has a ratio of stiffness in transversal direction to stiffness in machine direction of larger than 1, preferable of larger than 1,1, more preferable of larger than 1,25, even more preferable of larger than 1,4. This is achieved by stretching from primary tube to the final casing on the reel with ratios of stretching in transversal direction to stretching in machine direction of larger than 1,15, preferable of larger than 1,25, more preferable of larger than 1,4, even more preferable of larger than 1,6. Considering the common mono-directional (i.e. machine direction) stretching of high PO content films (i.e. ratio of stretching is 0) and post-orientation stretching in machine direction being proposed in the prior art, the use of stretching ratios as just described is not obvious. Surprisingly, the casing, when produced according to the invention, yields sausages in a tight and well-rounded condition even after a "fill-and-cook-in" procedure. In addition, because of the high content of PO and both skin layers predominantly comprising POs, especially for sausages, the exudation of meat juice originating from the food through the casing wall is efficiently prevented, so that even after a long storage time weight loss related wrinkles are avoided.

An optional coating step is typically carried out separately from the extrusion process to maintain flexibility in production. However, it is also possible to carry out optionally a coating process of the outer skin layer together with the extrusion and/or annealing steps in an in-line process whenever the outer skin layer is accessible.

If the outer skin layer of a tubular casing shall later become a food contact layer, the method may optionally include a step of reversing the casing. A coating of said outer skin layer with a functional additive preferably takes place before reversing. In principle the reversing can take place before an internal coating step. Generally, the reversing needs to take place before or during shirring or at the latest before stuffing.

The coextruded thermoplastic food casing according to this invention can be a flat film, which is sealed at the latest at the time of stuffing, a sealed flat film or a tubular casing. For convenience, if the casing is a flat film or a cut-open tubular film, the optional coating step with the functional additive can be done before sealing the film to a tube. The sealing can be done e.g., by heated tool welding or preferably by ultrasonic welding but depending on the materials used in the structure any other known sealing method can be used, including gluing.

In a preferred embodiment the food casing of the present invention, the optional coating of the outside surface with a functional additive takes place with printing or spraying techniques or by immersing the casing into a bath. Typically, a separate drying step is not necessary if the dosage is adequate. Nevertheless, a drying step, which at the same time may serve as an annealing step if the heat stability of the functional additive is high enough, may be helpful to immobilise the at least one transferable functional additive. Drying can take place by conventional drying technologies like hot air, infrared or other means, including air-blades. If the air-blade is making use of cold air, annealing is not possible, but also shrink will not be released.

In a preferred application the food casing of the present invention takes up at least one transferable functional additive while being transferred through two squeezing rollers arranged one after the other, where there may be located a bubble of liquid containing the composition containing the at least one transferable functional additive which is preferably a solution or suspension or both. The uptake is enhanced if the optional at least one porous skin layer has a very high open porosity which provides for an extraordinarily high absorption amount. Within few seconds, a sufficient amount of the functional food additive is taken up by capillary forces through the openings of the interconnected porosity. A separate drying step may not be necessary if the dosage is adequate.

If without any optional porous layers, the casings of the invention have a thickness of 20 to 90 µm, more preferred 40 to 70 µm, and have at least in one direction a shrinkage after 1 min in water of 80°C of up to 30%, preferably less than 20%, more preferred of less than 10%.

The obtained reels of casing can then be printed, impregnated with functional additives in case the casing has a porous inner skin layer, rounded, shirred and/or sealed to bags in the respective production steps, which convert the casing of the invention to the desired final product. Optionally, the casing can be corona treated internally and/or externally at any time after the annealing step. Surprisingly, to achieve the needed stiffnesses for the described converting steps and the later cooking application, there is no need for cross-linking any part of the structure before or after the biaxial orientation or for carrying out a post-orientation stretching. Nevertheless, if desired, a cross-linking step and/or a post-orientation stretching can be added.

Optionally the casing can be shirred with conventional technology as known to the person skilled in the art. Alternatively, the usage from the reel, in sections or as bags is possible as well.

The food casing can be sealed to bags, especially when the skin layers of the same PO type have a lower maximum melting temperature than the at least one non-skin layer comprising at least one component with a density of larger than 1,00 g/cm³. This structure allows to set the sealing temperature in such a way that said at least one non-skin layer is not sealed through, while the inner skin layers are being sealed together. It is advisable to seal porous skin and non-skin layers, which are used for absorbance of a food substance, so that all pores in the sealing area are closed during the sealing.

Based on the above properties, a food casing according to the invention can be stuffed with foodstuff, especially with meat products like sausage or ham emulsion or processed cheese or fish products and render wrinkle-free final products after cooking and cooling. A food casing according to the invention, which is coated or impregnated, can transfer the colouring or flavouring food substances onto the stuffed foodstuff during cooking and/or storage.

The invention will now be described using examples of embodiments and comparative examples, but without limiting the scope of the invention.

### EXAMPLES

The following raw materials were used in the production of the examples:

| Cat. | Type | Grade | by | g/cm³ RT |
|---|---|---|---|---|
| A1 | LDPE mod | Admer NF 518E | Mitsui Chemicals | 0,920 |
| A2 | LDPE mod | Bynel 50E571 | Du Pont | 0,890 |
| B1 | LDPE | Flexirene CL 10U | Polimeri Europa | 0,918 |
| B2 | PP | Moplen RP340H | LyondellBasell | 0,900 |
| C1 | COC | Topas 8007F-600 | Polyplastics | 1,010 |
| C2 | aPA 6I/6T | G21 | EMS | 1,180 |
| C3 | PA 6 | Akulon F136C | DSM | 1,140 |
| C4 | EVOH | EVAL 171 B | Kuraray | 1,190 |
| C5 | PVOH | Poval 5-88 FA | Kuraray | 1,290 |
| D1 | POP | Affinity PF1140G | DOW | 0,897 |
| NA | LDPE MB | LLDPE + 40% talc | Performance Compounding | 1,631 |
| AD1 | Soybean oil | refined IP Ph. Eur. 8.0 | Gustav Heess | 0,920 |
| AD2 | glycerine | 99,5% Distilled Glycerine / Pharma grade | Preol | 1,261 |
| AD3 | silica | Hi-Sil ABS-D | PPG Industries | 2,000 |

When a skin layer was to become porous, nitrogen (Nitrogen 4.0 (99,99 %) by Linde Gas) was used as a supercritical pore-forming agent. The Porous Composition PC1 (non-porous density at RT: 1,11 g/cm³), which is used in porous non-skin layers of 5-layered examples, was composed of the following raw materials:
73 weight-% B1
27 weight-% NA
1 g Nitrogen/kg composition

After extrusion of a casing with a porous inner skin layer (Example E2), the said layer was coated with the functional additive Hickory Alkalized Smoke by Kerry Ingredients & Flavours using a vertical "moving bubble" between 2 pairs of nip reels, allowing a contact time of 120 s. The pressure of the upper squeezing reel pair was 2 bar.

The Porous Composition PC2 (non-porous density at RT: 1,043 g/cm³), which is used in porous non-skin layers of 7-layered examples E7, E8 and E9, was compounded using the following raw materials:
63 weight-% B2
19 weight-% AD1
8 weight-% AD2
10 weight-% AD3

The oil and the glycerine were mixed in a bowl at a temperature of 50 °C. Then the mixture was entered into the silica and mixed for 10 min until the mixture had turned into floatable crumbles. These crumbles and the PP were continually dosed in the desired ratio via a gravimetric dosing system into the funnel of a compounder (VSK 25 by Werner & Pfleiderer). The compounder had a screw with diameter 25 mm and a length to diameter ratio of 50. The compound was homogenized at 200 rpm at temperatures of 200 to 220 °C and exited the compounder through a 2 x 3.5 mm diameter strand die with an output of 15 kg/h. The 2 strands were cooled down in a water bath and chopped into granules.

### EXTRUSION

The examples E1 to E5 according to the invention and the comparative examples CE1 to CE3 were produced on a 5-layer double-bubble line. The examples E6 to E9 according to the invention and the comparative example CE4 were produced on a 7-layer double-bubble line. The dosing system for the injection of the supercritical pore-forming agent was linked to the extruder feeding the porous inner skin layer or the porous outer skin layer, respectively.

The tubular casings were made by plasticizing and homogenizing the raw materials described in table 1, the first layer mentioned being the one in contact with the foodstuff. In the respective extruder melt temperatures were around 240°C in the case of layers comprising at least one component with a density of more than 1,00 g/cm³ and around 220°C in the case of PO-based layers. The 5 respectively 7 melt-pump-fed melt-flows were co-extruded into a primary tube by using a 5- respectively 7-layer head in which the individual flows were joined in quantitative ratios according to the desired wall thickness of the individual layers and extruded through an annular die.

The primary tube was quickly cooled down to 10°C to 20°C and then pre-heated by IR-heating to the temperature, at which a stable bi-axial orientation bubble of the respective example structure could be run. After annealing, the casing was flattened and reeled. In extrusion of examples and comparison examples the area orientation ratio from primary tube to the final casing was around 7 to 9. However, in the case of the examples according to the invention, the ratio of stretching in transversal direction to stretching in machine direction was 1,28 to 1,41, while the comparison examples had a stretching ratio of up to 1,26. The flat width of the tubular casings was 160 mm. The casings were annealed to have 5 to 15% shrinkage (measured after 1 min in water of 80°C) in transversal and longitudinal direction, the higher values being necessary to avoid that porous layers melt down during annealing of the casing.

The examples and comparative examples were produced as described above and with layer thicknesses LT and resulting layer densities LD and overall casing densities CD as described in table 1. CE 1 is a 5-layered PA-based casing of 25 µm thickness. CE2 is a standard sausage casing structure with two PA-based skin layers and a thickness of 50 µm. CE3 is an inversion of CE2 with a core layer of PA and two PE-based skin layers. Example E1 has the same structure as CE3 but an overall stretching ratio of 1,38. E2 has a porous inner skin layer and an amorphous PA content in the core layer. E3 has an EVOH-based core layer, whose high density is compensated by POP in an adjacent non-skin layer. E4 has a core layer based on a blend of PA and PVOH and a density-compensating adjacent non-skin layer made of adhesive and POP. E5 has a core layer of COC.

Comparative example CE4 is a PP-based 7-layer structure with a non-skin layer based on PA. Example E6 is CE4 but with an overall stretching ratio of 1,41. E7 is E6 but with a non-skin porous layer between the PA-based non-skin layer and the inner skin layer. E8 is E7 but with a non-skin porous layer between the PA-based non-skin layer and the outer skin layer. E9 is E8 but with a porous outer skin layer.

The layer thickness LT of porous layers was evaluated by light microscopy and is given in table 1. Therein, the layer thickness of non-porous layers as well as the non-porous thickness of porous layers (from which the porosity is calculated), was calculated with the extruded volume for every individual layer via the rotations per minute of its melt pump. The porosity of skin layers does not contribute to a reduction of the overall density of the casing CD.

The non-porous PO-based inside surface of the casings according to the invention were corona-treated to have a wetting tension of 38 mN/m. With the same setting of the corona treater, also porous inner skin layers were treated.

Table 1 gives an overview of the examples prepared.

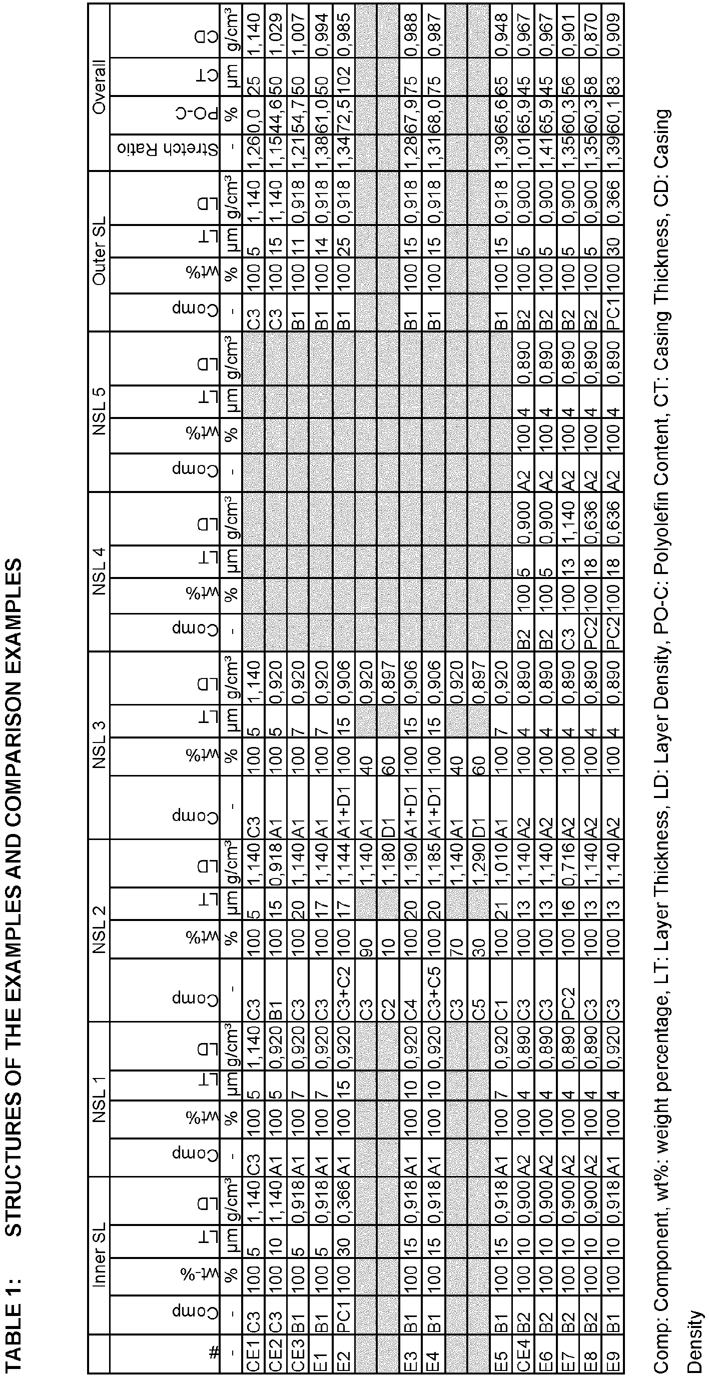

### SAMPLE EVALUATION

The examples were characterized using the following evaluation methods.

### - Light Microscopy

To determine the layer thickness of the different layers, cross-sections cut vertically through the casing were evaluated under a light or optical microscope in a suitable magnification and contrast. The thickness of the layers was determined on 20µm-thick thin-sections, cut with a RM 2245 microtome by Leica and analysed with a BX51 microscope by Olympus, using a magnification of 10x40 in light transmission mode. In case that the casing cannot be cut without separation of the thin-section, a cryomicrotome may be helpful and/or the sample may be embedded in curing resin prior to cutting.

### - Surface tension test

To determine the surface tension of the non-porous inner skin layer surfaces, the casings were cut open and evaluated using standard testing ink brushes (LAB-DYNE bottles by Vetaphone) and the prescribed evaluation method, moving the brushes in transversal direction over the surface.

### - Shrinkage test

To determine the shrinkage of the casing under cooking conditions, a length of 100 mm was marked in transversal direction (TD) and in machine direction (MD) on the outside of the casings. The marked casings were immersed into a basin with water at 80°C for 1 min. The marked length was measured and the difference in % documented as the shrinkage values in TD and MD.

### - Tensile test

To determine the mechanical stiffness in transversal direction (TD) and machine direction (MD), a tensile test was carried out at 23°C and 50% relative humidity according to ISO 527, using samples of 150 mm length and 25 mm width, which had been conditioned for 24 h at testing condition, mounting them with a clamp distance of 100 mm and pulling them at a speed of 100 mm/min. The secant modulus between 0,5% and 4,5% was determined. The wall thickness of the sample was measured by manual thickness gauge.

### - Cooking test

To evaluate the formation of wrinkles after cooking and cooling, Bologna-type sausages were prepared by stuffing 3 kg of meat emulsion into the sample material, using the same medium brake setting, cooking the sausages in a cooking chamber at 76°C for 2 hours and cooling them down over night to 3 °C in a cooling chamber. The casings were not soaked prior to stuffing.

The formation of wrinkles was visually evaluated on a scale from 0 (= wrinkles not visible) via 1 (= wrinkles smaller than 3 cm on one end visible) and 2 (= wrinkles on both ends visible) to 3 (= wrinkles visible along the entire sausage).

The adhesion of the meat to the surface of the inner skin layer was graded on a scale from 0 (= no meat adhesion) via 1 (= islands of meat adhesion) and 2 (= areas of meat adhesion representing more than 50% of the surface) to 3 (= meat adhesion along the entire sausage representing more than 90% of the surface) by means of visual evaluation of the casing after having been peeled off from the cooled sausage.

### - Casing Opacity

The casing's opacity was evaluated by UV-vis spectroscopy (Shimadzu UV-2101 PC Spectrophotometer with integrated Ulbricht-sphere (150 mm)) and also visually before peeling the cooked sausage. When the foodstuff is visible, there is no opacity, and the casing is "transparent" (visual light transmittance in the range from 400 to 600 nm of 60% or more). If the casing contains a porosity with pores small enough to break the light, the casing appears "white" and has a high opacity (visual light transmittance in the range from 400 to 600 nm of less than 60%). In case of larger pores in a layer, the "pores" are visible from the outside if the porous layer is between an opaque non-skin or inner skin layer and the outer surface of the casing.

Table 2 shows the results of the evaluated properties.

**TABLE 2: PROPERTIES OF THE EXAMPLES AND COMPARATIVE EXAMPLES**

| | Surface Tension | Shrinkage | | Stiffness | | | Cooking Test | | Casing Opacity |
|---|---|---|---|---|---|---|---|---|---|
| # | | TD | MD | TD | MD | Ratio | Wrinkles | Meat Adhesion | |
| - | dyne | % | % | MPa | MPa | - | - | - | - |
| CE1 | 42 | 6,0% | 7,5% | 1096 | 1241 | 0,88 | 1 | 3 | transparent |
| CE2 | 42 | 7,5% | 8,5% | 630 | 707 | 0,89 | 1 | 2 | transparent |
| CE3 | 38 | 6,5% | 7,0% | 454 | 488 | 0,93 | 2 | 0 | transparent |
| E1 | 38 | 7,5% | 4,5% | 436 | 360 | 1,21 | 0 | 0 | transparent |
| E2 | [38] | 12,0% | 8,0% | 359 | 290 | 1,24 | 0 | 0 / transfer | transparent |
| E3 | 38 | 8,5% | 5,5% | 586 | 501 | 1,17 | 0 | 0 | transparent |
| E4 | 38 | 7,0% | 4,5% | 567 | 509 | 1,11 | 0 | 0 | transparent |
| E5 | 38 | 7,5% | 6,0% | 542 | 474 | 1,14 | 0 | 0 | transparent |
| CE4 | 38 | 5,5% | 6,5% | 506 | 564 | 0,90 | 2 | 0 | transparent |
| E6 | 38 | 7,0% | 6,0% | 601 | 570 | 1,05 | 0 | 0 | transparent |
| E7 | 38 | 12,5% | 9,0% | 548 | 499 | 1,10 | 0 | 0 | white |
| E8 | 38 | 13,0% | 9,0% | 559 | 487 | 1,15 | 0 | 0 | white |
| E9 | 38 | 12,0% | 8,5% | 434 | 382 | 1,14 | 0 | 0 | white + pores |

According to the invention, all examples have an overall PO content of more than 50%, an overall casing density of less than 1,00 g/cm³ and a stretch ratio of more than 1,27 (see table 1). The comparison examples either show meat adhesion (CE1 and CE2 in table 2), which is a contamination in the recycling process, and/or their sausages are more or less wrinkled (CE3 and CE4 in table 2). This behaviour occurs because of their higher surface tension and because of their stiffness ratio of less than 1, respectively.

On the contrary, the examples according to the invention E1 to E9, comprising at least one non-skin layer comprising at least one component with a density of more than 1,00 g/cm³, show no wrinkles and no meat adhesion due to a stiffness ratio of larger than 1 and a corona-treated inner PO-based skin layer, respectively.

As described above, alternatively porous layers can be used as the food contacting layer so that functional substances can be transferred to the sausage. After cooking foodstuff in a smoke-coated casing according to the invention (E2), the functional additive is being transferred completely and homogenously to the foodstuff.

When porosity breaks the light (E7 to E9), the casing appears white, covering the colour of the foodstuff, e.g., giving a background for large pores in the outer skin layer in case of E9, which feels rough to the touch due to the porosity in said outer layer.

Depending on the position of the non-skin layer comprising PC2 in the structure, the porosity can develop easily (E8 and E9) or is compressed by the at least one layer comprising at least one component with a density of larger than 1,00 g/cm³ (E7), as becomes visible when analysing the porous layer thickness under the light microscope (see table 1).

The examples according to the invention could be shirred, stuffed dry and cooked without breakages in any of the process steps. The clean peeling leaves two skin layers of the same PO type ready for detection by NIR-sensors and yields to correct separation in floating or other gravity related recycling steps.

To sum up, the examples show that the casings according to the invention combine the desired physical properties and reliable mechanical properties to obtain sausage casings suitable for the application and the after-use recycling process.

## Claims

1. Recyclable multi-layered coextruded bi-axially oriented thermoplastic food casing with more than 50% by weight polyolefin (PO) content which comprises two skin layers, an outer skin layer and an inner skin layer which are essentially based on the same PO type and where the inner skin layer is optionally porous, and inbetween of the two skin layers:
∘ at least one non-skin layer, which comprises at least one thermoplastic component with a density of more than 1,00 g/cm³,
∘ optionally at least one non-skin layer comprising at least one thermoplastic component with a density of below 0,915 g/cm³ or having at least a total layer density of below 0,915 g/cm³,
wherein
- the PO type of the two skin layers has a melting temperature above 105°C and below 170°C, and is selected from the group consisting of LDPE, HDPE and PP,
- the at least one thermoplastic component with a density of more than 1,00 g/cm³ is selected from the group consisting of:
∘ amorphous thermoplastic polymers with a glass transition temperature above 50°C and below 160°C, such as COC or amorphous PA,
∘ PA with a melting temperature above 160°C and below 250°C,
∘ EVOH, and
∘ PVOH
- the at least one thermoplastic component with a density of below 0,915 g/cm³ is selected from the group consisting of PP and copolymers of ethylene selected from ULDPE, VLDPE and POP, and
- the at least one non-skin layer having a total layer density of below 0,915 g/cm³ comprises at least one thermoplastic component with a density of below 0,915 g/cm³ and/or is a porous layer
and wherein:
- the overall density of the casing is below 1,00 g/cm³, and
- a ratio of stiffness in transversal direction to stiffness in machine direction is higher than 1.

2. The food casing according to claim 1, wherein the PO comprises PP, PP random or block copolymers with polyethylene, or β-crystallized PP.

3. The food casing according to claim 1 or 2, wherein the at least one non-skin layer, which comprises at least one thermoplastic component with a density of more than 1,00 g/cm³ comprises EVOH, COC or PA.

4. The food casing according to any one of the preceding claims, wherein the at least one non-skin layer comprising at least one thermoplastic component with a density of below 0,915 g/cm³ or having at least a layer density of below 0,915 g/cm³ comprises a POP.

5. The food casing according to claim 3, wherein the PA is selected from PAs having a melting temperature of less than 200°C, preferably being a Copolyamide 6/66 or a PA6/12.

6. The food casing according to any one of the preceding claims, which is a seamless tubular multi-layered bi-axially oriented coextruded thermoplastic food casing.

7. The food casing according to any one of the preceding claims, wherein the thermoplastic material of the inner skin layer has a lower melting temperature than at least one thermoplastic component of the other layers.

8. The food casing according to any one of the preceding claims, wherein the casing comprises at least one thermoplastic porous absorbing inner skin layer and optionally additional adjacent porous non-skin layers, capable of transferring previously absorbed functional substances such as flavours or colours onto the contacting foodstuff.

9. The food casing according to claim 8, wherein the porosity of said at least one porous absorbing inner skin layer has been generated by coextruding a polymer composition comprising a β-nucleated PP or a supercritical, a physical and/or a chemical pore-forming agent.

10. The food casing according to any one of the preceding claims, wherein the inner skin layer and/or the outer skin layer is corona treated and/or contains COC.

11. The food casing according to any one of the preceding claims wherein the casing has not a tubular form but a flat film form.

12. The food casing according to any one of the preceding claims, wherein the overall thickness of the casing has 20 to 90 µm, preferably 40 to 70 µm if not containing a porous layer, and 25 to 400 µm, preferably 40 to 300 µm, more preferably 50 to 200 µm if containing at least one porous layer.

13. The food casing according to claim 1 having a porous layer between the at least one non-skin layer and the outer surface of the casing.

14. The food casing according to claim 13 wherein the porous layer is coloured.

15. The food casing according to claim 1 having a porous non-skin layer wherein the created porosity makes the casing have a visual light transmittance in the range from 400 to 600 nm of less than 60%, as measured by UV-vis spectroscopy without addition of pigments.

16. The food casing according to claim 15 wherein a coloured layer is present between said porous non-skin layer with small porosity and the outer surface of the casing.

17. Method for producing a multi-layered (co)extruded bi-axially oriented thermoplastic food casing as defined in any one of claims 1 to 16, comprising
a) co-extruding the composition of the different layers forming thermoplastic food casing through an annular die,
b) rapid quenching of melt to obtain a multilayered tube,
c) reheating the casing and biaxially orienting it by an air bubble between two pair of reels of different speed, and
d) annealing the casing.

18. A method according to claim 17 where, in the case the inner skin layer is porous, said porous inner skin layer is coated with a transferable substance and optionally subjected to a drying step.

19. A method according to claim 17 where co-extrusion of step a) is not performed through an annular die but in the form of a flat film and the biaxial orientation is achieved by means of a tenter-frame line.

20. The use of food casing as defined in any one of claims 1 to 16 for being stuffed or as a wrapping for meat, cheese and other foodstuff products.
